# EUROPÄISCHE PATENTSCHRIFT

(11) **EP 3 691 756 B1**
(45) Veröffentlichungstag und Bekanntmachung des Hinweises auf die Patenterteilung: **02.03.2022**
(21) Anmeldenummer: 17783816.6
(22) Anmeldetag: 06.10.2017
(51) Int. Cl.: A62C 35/68, A62C 37/14, F16L 37/252

(54) **SPRINKLERVORRICHTUNG, ANSCHLUSSSTUTZEN, SPRINKLERSYSTEM SOWIE VERFAHREN ZUM HERSTELLEN UND VERWENDUNG DERSELBEN**
SPRINKLER DEVICE, CONNECTING BRANCH, SPRINKLER SYSTEM AND METHOD FOR PRODUCING AND USING SAME
DISPOSITIF SPRINKLER, RACCORD, SYSTÈME DE SPRINKLER AINSI QUE PROCÉDÉ DE PRODUCTION ET UTILISATION DE CE DERNIER

(30) Priorität: 07.09.2017 DE 102017120659
(43) Veröffentlichungstag der Anmeldung: 12.08.2020
(73) Patentinhaber: Batagan, Miktat, 78554 Aldingen (DE)
(72) Erfinder: Batagan, Miktat, 78554 Aldingen (DE)
(74) Vertreter: Kuhnen & Wacker Patent- und Rechtsanwaltsbüro PartG mbB
(86) Internationale Anmeldenummer: PCT/EP2017/075499
(87) Internationale Veröffentlichungsnummer: WO 2019/048072

(56) Entgegenhaltungen:
- WO-A1-00/09932
- WO-A1-00/09932
- WO-A1-00/09932
- WO-A1-2012/108574
- WO-A1-2016/196836
- WO-A1-2016/196836
- WO-A1-2016/196836
- CN-U- 201 944 466
- CN-U- 201 944 466
- CN-U- 201 944 466
- FR-A1- 2 603 812
- FR-A1- 2 603 812
- JP-A- H09 201 427
- KR-Y1- 200 403 464
- US-A- 1 241 747
- US-A- 5 836 397
- US-A- 5 836 397
- US-A1- 2005 236 166
- US-A1- 2005 236 166
- US-A1- 2016 151 654
- US-A1- 2016 151 654
- Anonymous: "O-Ring Handbook", , 31. Juli 2015 (2015-07-31), XP055775621, Gefunden im Internet: URL:https://www.parker.com/literature/Prae difa/Catalogs/Catalog_O-Ring-Handbook_PTD5 705-EN.pdf [gefunden am 2021-02-12]
- Anonymous: "O-Ring Handbook", , 31 July 2015 (2015-07-31), XP055775621, Retrieved from the Internet: URL:https://www.parker.com/literature/Prae difa/Catalogs/Catalog_O-Ring-Handbook_PTD5 705-EN.pdf [retrieved on 2021-02-12]

## Beschreibung

### Gebiet der Erfindung

Die Erfindung betrifft eine Sprinklervorrichtung nach Anspruch 1 sowie ein diese aufweisendes Sprinklersystem nach Anspruch 7.

Sprinkleranlagen dienen als automatische, ortsfeste Brandbekämpfungsanlagen, die häufig in Sonderbauten wie Hochhäusern, Geschäftshäusern, Kaufhäusern, Fertigungshallen, Lagerräumen, Krankenhäusern und Tiefgaragen eingesetzt werden. Hierbei sind sie Teil der Brandschutzeinrichtung, die in der Regel von Behörden oder Versicherungen verlangt werden. Herkömmliche Sprinkleranlagen sollen dabei den Brand aufgrund der entstehenden Hitze erfassen, automatisch auslösen und ihn so im Idealfall bereits in seiner Entstehungsphase bekämpfen.

Als sicherheitskritisches System unterliegen Sprinkleranlagen dabei in Planung, Einbau, Betrieb sowie Installation bestimmten Richtlinien. Insbesondere sind bei der Auslegung dieser Anlagen die Bestimmungen nach der VdS-Richtlinie VdS CEA 4001 sowie der Norm DIN EN 12845 zu berücksichtigen. Dabei werden Anforderungen an die Wasserversorgung, das Rohrleitungssystem aber auch an die Art sowie die Ansprechempfindlichkeit der Sprinklerdüsen in Abhängigkeit des jeweiligen Einsatzortes, das heißt dem Bereich der Installation der Sprinkleranlage, gestellt.

Je nach Brandgefahrenklasse des Einsatzortes ergibt sich dabei eine maximale Schutzfläche, die von einer einzelnen Sprinklerdüse sicher abgedeckt werden kann. Hieraus lassen sich je nach Sprinkleranordnung maximale Abstände zwischen den einzelnen Sprinklerdüsen herleiten. Dies führt besonders in Großräumen, wie Lager- oder Fertigungshallen, zu einer hohen Anzahl von zu installierenden Sprinklerdüsen.

Aufgrund der hohen Anzahl zu installierender Sprinklerdüsen ist insbesondere bei Flughäfen, Fertigungsstandorten, etc. ein erheblicher Zeit- und Personalaufwand nötig, um die Sprinklerdüsen zu installieren oder im Rahmen der Wartung zu prüfen und ggf. auszutauschen, wodurch neben der reinen Zeit auch nicht unerhebliche Kosten entstehen. So müssen zur Installation einer Sprinkleranlage etwa in Fertigungshallen mehrere hundert Sprinklerdüsen verbaut werden. Selbst bei einer großen Anzahl von Monteuren, welche zeitgleich mit der Installation betraut sind, kann dies mehrere Tage bis Wochen, und in Ausnahmefällen sogar Monate, in Anspruch nehmen.

Der Einbau dieser Sprinklerdüsen erfolgt hierbei in der Regel mittels eines am Sprinklerkopf ausgebildeten Anschraubgewindes, über das jede zu montierende Sprinklerdüse in ein entsprechendes Gegenstück des Rohrsystems eingeschraubt wird. Dieses Einschrauben erfolgt dabei zwangsläufig aus einer Position über Kopf und erfordert, insbesondere bei einem manuellen Eindrehen der Sprinklerdüsen in das Rohr, einen mitunter erheblichen Kraftaufwand des Monteurs.

Die Arbeit ist daher für den Monteur körperlich anstrengend, da nicht nur die Überkopf-Position für ihn ungünstig ist, sondern zudem eine bestimmte Kraft zum Eindrehen der Sprinklerdüsen in das Rohr notwendig ist, um eine dichte Verbindung gewährleisten zu können. Aufgrund dieser hohen Beanspruchung treten häufig Beeinträchtigungen im Schulterapparat, bzw. Schulter-Nacken-Bereich, insbesondere dem Schultergelenk, auf. Zudem besteht für den Monteur beim Eindrehen der Sprinklerdüsen in das Rohr ein nicht unerhebliches Verletzungsrisiko, insbesondere an scharfen Graten und dem Sprühteller.

Meist ist zudem ein vollständiges Eindrehen der Sprinklerdüsen in das Rohr von Hand nur unter Zuhilfenahme von Gabelschlüsseln oder Rohrzangen oder dergleichen möglich, da nur auf diese Weise ein ausreichend hohes Anzugsmoment aufgebracht werden kann, um die Sprinklerdüsen wasserdicht an dem Rohr zu befestigen.

Obgleich derlei Werkzeige dem Monteur die Arbeit erleichtern, sind diese in der Regel nicht primär für die Sprinklermontage ausgelegt. Sie erleichtern zwar die Kraftübertragung auf die Sprinklerdüse, stellen für den Monteur aber zusätzliches, über dem Kopf zu haltendes Gewicht dar.

Aufgrund der hohen Krafteinwirkung auf die Sprinklerdüse besteht bei der Montage zudem das Risiko, diese zu beschädigen. Gerade auf den Sprühteller wirken etwa durch das Greifen des Monteurs während des Einschraubens hohe Scherbelastungen, welche zu einem Verbiegen, im schlimmsten Fall sogar zu einem Lösen des Tellers führen können. Auch bei der Verwendung von Werkzeugen können Beschädigungen, etwa Risse in der Glasampulle oder ein Brechen einzelner Gewindegänge der Sprinklerdüse verursacht und nicht entdeckt werden. Gerade bei sicherheitskritischen Anlagen gilt es derartige Gefahren zu vermeiden, um eine ordnungsgemäße Funktion der Sprinkleranlagen gewährleisten zu können.

Alternativ finden sich Montagetechniken, bei welchen die Sprinklerdüsen mittels Schweißverfahren oder Pressverfahren vorab am Rohrstück befestigt werden. Dabei entstehen in unmittelbarer Nähe der Sprinklerdüse jedoch hohe Temperaturen, welche bei einer Unachtsamkeit des Monteurs schnell zu einem Erhitzen derselben und somit einem Zerplatzen der Glasampulle führen können. Zudem verschärft sich das Problem der hohen aufzubringenden Kraft bei der über Kopf zu bewerkstelligen Arbeit, da nun anstelle der Sprinklerdüse gesamte Rohrstücke samt Sprinklerdüse an Rohrleitungssystemen montiert werden müssen.

### Stand der Technik

Sprinklersysteme, die eine Sprinklerdüse mit einer darin ausgebildeten Fluidleitung und einen Sprühteller umfassen, sind aus dem Stand der bekannt, siehe beispielsweise die DE 199 07 442 A1 oder WO 2007/124403 A2.

Mittels des Sprühtellers kann die über Rohrleitungen zugeführte, aus dem Sprinklerkörper ausströmende Flüssigkeit großflächig zerstreut werden, wobei je nach Geometrie von Sprinklerdüse und Sprühteller abhängig vom Wasserdruck ein mehr oder weniger großer Bereich abgedeckt werden kann. Bei den aus dem Stand der Technik bekannten Systemen weist ein Abschnitt des Sprinklerkörpers einen Gewindeabschnitt an seinem Außenumfang auf. Über dieses Außengewinde wird die Sprinklerdüse manuell an einer Rohrleitung verschraubt.

Weiter offenbart der Stand der Technik Hilfswerkzeuge zur Unterstützung bei der Montage derartiger Sprinklerdüsen mit Gewinde. So offenbart beispielsweise die EP 1 690 635 A2 eine Vorrichtung und ein Verfahren zur maschinellen Montage von Sprinklerdüsen. Dabei ist eine Montagevorrichtung ausgebildet, welche den Sprinklerkopf einer Sprinklerdüse umgreifen kann.

Bei der Montage der Sprinklerdüse an einer Rohrleitung wird bei in dem EP 1 690 635 A2 offenbarten System die Sprinklerdüse ebenfalls in ein Innengewinde einer entsprechenden Rohrleitung eingeschraubt, wobei die ersten Gewindegänge hierbei per Hand eingeschraubt werden müssen. Anschließend wird die speziell für diese Sprinklerdüse ausgebildete Montagevorrichtung positionsgerecht auf den Sprinklerkopf aufgesetzt.

Mittels dieser Montagevorrichtung erfolgt schließlich das maschinelle Einschrauben mit Hilfe eines an der Montagevorrichtung anbringbaren Akkuschraubers. Nach dem Einschrauben muss die Montagevorrichtung wieder von dem Sprinklerkopf entfernt werden, um über den nächsten Sprinklerkopf gestülpt zu werden, nachdem die Sprinklerdüse bereits teilweise per Hand eingeschraubt worden ist.

Wie vorstehend dargestellt worden ist, müssen die Sprinklerdüsen unter erheblichen Kraftaufwand und in einer Position über Kopf in die Rohrleitungen eingeschraubt werden. Obgleich das Einschrauben der Sprinklerdüse mit dieser Vorrichtung erleichtert wird, muss der Monteur dennoch viel Kraft aufwenden, da er einerseits die ersten Gewindegänge selbst einschrauben, und andererseits die schwere Montagvorrichtung stemmen muss. Diese aufwendige Installation der Sprinklerdüsen führt zu einer raschen Ermüdung des Monteurs und damit letztlich zu Fehlern bei der Montage.

Aufgrund der hohen, vorgeschriebenen Anzahl von zu installierenden Sprinklerdüsen ist die Installation derartiger Sprinkleranlagen zudem mit einem erheblichen Zeitaufwand verbunden. Die Installation von Sprinkleranlagen bereitet der Baubranche daher häufig Schwierigkeiten, da hier der vorherrschende Zeit- und Kostendruck besonders hoch ist. Spezielle Werkzeuge verfehlen aber ihre Wirkung, da sie die Kosten der Sprinkleranlage zusätzlich in die Höhe treiben und für den Monteur zusätzliches Gewicht bedeuten, welches er über Kopf zu halten und zu bedienen hat.

Zum Stand der Technik wird allgemein noch auf die WO 00/09932 A1 und die CN 201 944 466 U verwiesen. Einschraubbare Sprinklervorrichtungen sind zudem aus der WO 2016/196836, der WO 2012/108574 A1, der JP H09-201427 A, der KR 20-0403464 Y1 und der US 1,241,747 bekannt

Ausgehend vom Stand der Technik liegt der Erfindung daher die Aufgabe zugrunde, eine in ihren Herstellkosten günstige Sprinklervorrichtung zu schaffen, welche einfach, sicher und schnell, auch in bereits bestehende, Rohrsysteme integriert werden kann sowie einfach in der Wartung ist. Zudem liegt der Erfindung die Aufgabe zugrunde einen ein die Sprinklervorrichtung aufweisendes Sprinklersystem zu schaffen.

### Kurzfassung der Erfindung

Diese Aufgabe wird durch eine Sprinklervorrichtung nach Anspruch 1 und ein Sprinklersystem nach Anspruch 7 gelöst.

Erfindungsgemäß besteht die Sprinklervorrichtung dabei aus einem Sprinklerkopf, der ein Rohrelement und ein mit dem Rohrelement verbundenes Rahmenelement aufweist. Das Rohrelement weist eine Wassereinlassöffnung sowie eine der Wassereinlassöffnung in Axialrichtung des Rohrelements gegenüberliegende, dem Rahmenelement zugewandte Wasserauslassöffnung auf, wobei ein Verschlusselement in der Wasserauslassöffnung aufgenommen ist und diese verschließt. Zwischen dem Verschlusselement und dem Rahmenelement ist eine mit Flüssigkeit befüllte Glasampulle derart in Längsrichtung des Sprinklerkopfs angeordnet ist, dass deren erstes Ende an dem Verschlusselement anliegt, und deren zweites Ende an dem Rahmenelement anliegt, wodurch die Glasampulle das Verschlusselement in der Wasserauslassöffnung des Rohrelements hält. Die Sprinklervorrichtung ist dadurch gekennzeichnet, dass das Rohrelement an seinem Außenumfang zumindest zwei Rastelemente aufweist, welche sich radial von der Außenumfangsfläche des Rohrelements nach außen erstrecken und das Rohrelement an seiner Außenfläche ferner zumindest eine in Umfangsrichtung verlaufende Nut aufweist, in welcher ein Dichtungselement aufnehmbar ist, wobei die zumindest eine Nut in Axialrichtung des Rohrelements in Richtung zur Wassereinlassöffnung betrachtet weiter von der Wasserauslassöffnung beabstandet ist als die zumindest zwei Rastelemente.

Durch die erfindungsgemäße Sprinklervorrichtung ist es möglich, die Montage der Sprinklervorrichtung möglichst schnell zu gewährleisten. Durch die am Außenumfang des Rohrelements ausgebildeten Rastelemente wird diese in ein entsprechendes rohrseitiges Gegenstück einsteckt und anschließend verdreht. Je nach Anzahl der Rastelemente und der Länge der am Innenumfang in Umfangsrichtung verlaufenden Aufnahme ist zur Verdrehung der Sprinklervorrichtung etwa eine Viertelumdrehung, jedenfalls aber eine Umdrehung kleiner als 180 Grad notwendig. Damit ist die Montage der Sprinklervorrichtung im Vergleich zu herkömmlich bekannten Sprinklervorrichtungen denkbar schnell möglich, da sich die Anzahl der bei der Montage durchzuführenden Umdrehungen von einer Vielzahl von Gewindestufen auf weniger als eine halbe Umdrehung verkürzt.

Die zur Installation von Sprinklervorrichtungen notwendige Montagezeit lässt sich auf einen Bruchteil reduzieren. Insbesondere bei einer großen Anzahl von anzubringenden Sprinklervorrichtungen lässt sich durch die erfindungsgemäße Sprinklervorrichtung aufgrund der reduzierten Montagezeit ein Zeitvorteil erreichen, welcher sich in deutlich geringeren Montagekosten niederschlägt. Beispielsweise sind bei einer gleichen Anzahl anzubringender Sprinklervorrichtungen deutlich weniger Monteure notwendig, oder es lassen sich bei gleicher Anzahl Monteure die Montagezeiten zur Errichtung einer Sprinkleranlage stark verkürzen.

Durch die Ausbildung einer erfindungsgemäßen Steck-Dreh-Verbindung zwischen Sprinklervorrichtung und Rohrleitungssystem ist die Montage zudem möglichst einfach gehalten. Die Einbringung der Rastelemente ist hierzu derart fehlerrobust ausgebildet, das mehrere Kombinationen, das heißt mehrere Verdrehwinkel, zwischen Rastelementen und im Gegenstück ausgebildeter Aussparungen möglich sind. Das heißt, die Sprinklervorrichtung kann in jeder beliebigen, um ihre Längsachse veränderten Position in das Gegenstück eingefügt werden. Mit anderen Worten gibt es kein falsches Einbringen der Sprinklervorrichtung, bei welcher ein bestimmtes Rastelement in eine falsche, das heißt nicht zugehörige, Aussparung, bzw. Vertiefung eingefügt würde.

So lässt sich nicht nur aufgrund der Reduzierung der Montagezeit und damit der Arbeitsbelastung des einzelnen Monteurs, sondern auch aufgrund der gegen Montagefehler robusten Ausgestaltung der Sprinklervorrichtung die Fehlerhäufigkeit bei der Montage reduzieren. Dies ist gerade bei einer sicherheitskritischen Anlage, wie etwa einer Sprinkleranlage, wünschenswert.

Das Verschlusselement ist zumindest in einem Teilbereich konisch, sich in Richtung zur Wasserauslassöffnung verbreiternd, ausgebildet. Dabei ist das Verschlusselement in Führungen am Innenumfang des Rohrelements in Axialrichtung des Rohrelements derart verschiebbar gehalten, dass es die Wasserauslassöffnung verschließt. Wenn das Verschlusselement jedoch nicht durch die Glasampulle gehalten wird, kann es sich derart in den Führungen verschieben, dass ein Spalt zwischen dem Verschlusselement und dem Innenumfang des Rohrelements ausgebildet wird.

Durch diese erfindungsgemäße Weiterbildung der Sprinklervorrichtung wird die Wiederverwendbarkeit der Sprinklervorrichtung vereinfacht. Bei einem herkömmlichen Sprinkler geht der Stopfen, welcher den Wasseraustritt verschließt, nach einem Auslösen der Sprinkleranlage verloren. Dieser wird bei einem Platzen der Glasampulle vollständig aus der Wasserauslassöffnung gedrückt. Das erfindungsgemäße Verschlusselement verschiebt sich im Gegensatz hierzu nur relativ zu dem Rohrelement, und geht somit dabei nicht verloren. Durch Einsetzen einer neuen Glasampulle kann das Verschlusselement wieder in seiner Ausgangsposition gehalten werden.

Ein weiterer Vorteil einer derartigen Ausgestaltung des Verschlusselements ist darin zu sehen, dass das Verschlusselement bereits die Wirkung eines Sprühtellers entfaltet. Das aus der Wasserauslassöffnung austretende Wasser verläuft über den Außenumfang des Verschlusselements. Durch die konische Ausgestaltung des Verschlusselements wird das Wasser nach außen, das heißt, radial nach außen des Rohrelements ausgelenkt und verbreitet hierdurch den Bereich, in welchem sich das Wasser zerstreut.

Gemäß einer Weiterbildung der Sprinklervorrichtung können die zumindest zwei Rastelemente auf einer gemeinsamen Ebene senkrecht zur Axialrichtung des Rohrelements angeordnet sein.

Durch diese Weiterbildung verringert sich die Komplexität bei der Herstellung der Sprinklervorrichtung. Da sich bei einer geringeren Komplexität der Herstellungsprozess vereinfacht, können hierdurch die Produktionskosten gesenkt werden. Da sich aus der Ausgestaltung der Sprinklervorrichtung, insbesondere der Ausgestaltung der Rastelemente, die Geometrie des entsprechenden Rohrgegenstücks ergibt, kann auch hier eine Vereinfachung erzielt werden. Somit können die entsprechenden Vertiefungen ebenso auf einer gemeinsamen Ebene gefertigt, das heißt die Informationsdichte bei der Herstellung verringert werden.

Zudem wird durch die Anzahl zumindest zweier, einen Winkel von 180° Grad zueinander ausbildender, Rastelemente sichergestellt, dass die Montage sicher ausgeführt wird. Dabei kann durch die zwei Rastelemente die Wahrscheinlichkeit verringert werden, dass ein schiefes, das heißt zur Axialachse der Sprinklervorrichtung geneigtes, Einfügen der Sprinklervorrichtung in die Rohrleitungen erfolgt. Hierdurch kann ein Verkanten der Sprinklervorrichtung und damit eine Beschädigung der Sprinklervorrichtung oder ihres Rohrgegenstücks vermieden werden.

Insbesondere kann eine Beschädigung der Dichtungselemente verhindert werden. Eben diese Dichtungselemente sind aufgrund ihrer Funktion und Materialbeschaffenheit bei der Montage besonders zu berücksichtigen, was durch die erfindungsgemäße Sprinklervorrichtung erleichtert wird. Durch die Ausbildung zumindest zweier Rastelemente kann daher eine sichere Funktion der Dichtungselemente gewährleistet werden.

Nach einer Weiterbildung der Sprinklervorrichtung können das Rohrelement und das Rahmenelement des Sprinklerkopfes einstückig ausgebildet sein.

Auch durch diese Ausgestaltung lassen sich die Komplexität des Herstellverfahrens und somit die Kosten verringern. Durch die Verringerung der Anzahl der Bestandteile lässt sich nicht nur das Herstellverfahren aufgrund weniger Herstellschritte vereinfachen, ebenso wird hierdurch die Betriebssicherheit der Sprinklervorrichtung erhöht. Dabei wird die Fehlerquelle eines falschen Zusammenbaus während des Herstellverfahrens vermieden, auch kann etwa im Rahmen der Installation der Sprinklervorrichtung die Robustheit durch die erfindungsgemäße Ausgestaltung der Sprinklervorrichtung erhöht werden. Bei der Installation erfolgt entlang der Sprinklervorrichtung eine Kraftübertragung zum einen entlang der Längsachse wie auch eine Momentübertragung um die Längsachse, etwa beim Eindrehen der Sprinklervorrichtung. Diese Kraftübertragung muss bei einer mehrteiligen Sprinklervorrichtung über jede Schnittstelle erfolgen. Erfahrungsgemäß können dabei besonders an den Schnittstellen Beschädigungen, etwa durch Scherkräfte oder ein Lösen einer Verbindung, hervorgerufen werden.

Gemäß einer Weiterbildung der Sprinklervorrichtung kann ein Teilbereich des Außenumfangs des Rohrelements im Bereich der Wasserauslassöffnung polygonal, vorzugsweise als Sechskant, ausgebildet sein. Dieser Teilbereich kann dabei zumindest teilweise über den Außenumfang des Rohrelements radial nach außen ragen.

Auch durch diese Weiterbildung der Sprinklervorrichtung ist es möglich, das Herstellverfahren zu vereinfachen. Durch die polygonale Ausgestaltung des Außenumfangs, der im Bereich der Wasserauslassöffnung und somit nahe einem Randbereich des Rohrelements liegt, kann das Einspannen der Sprinklervorrichtung während des Herstellprozesses erleichtert werden. Insbesondere kann das Rohrelement durch die ausgebildeten Kanten sicher sowie beschädigungsfrei während der Bearbeitung gehalten werden. Hierdurch wird der Prozessschritt des Drehens zur Ausbildung etwa einer runden Außenumfangsfläche des Rohrelements sowie der Bearbeitung der Nuten und Rastelemente vereinfacht.

Der polygonal ausgestaltete Umfangsbereich kann zudem während der Montage als Angriffsfläche eines Werkzeugs dienen. Treten beispielsweise Montagefehler auf, kann durch den Einsatz eines herkömmlichen Werkzeugs, etwa einer Wasserpumpenzange, direkt an dem Rohrelement der Sprinklervorrichtung angesetzt werden. Sonderwerkzeuge, wie sie im Stand der Technik häufig zum Einsatz kommen, sind somit nicht notwendig.

Gemäß einer Weiterbildung der Sprinklervorrichtung können sich die zumindest zwei Rastelemente derart radial von der Außenumfangsfläche des Rohrelements nach außen erstrecken, dass zwischen den in Richtung zur Wasserauslassöffnung zeigenden Außenflächen der zumindest zwei Rastelemente und der Außenumfangsfläche des Rohrelements ein Winkel gebildet wird. Dieser ausgebildete Winkel kann dabei zwischen 30° und 90°, vorzugsweise zwischen 45° und 60° Grad liegen.

Gemäß dieser Weiterbildung lässt sich besonders die Sicherheit der bereits eingesteckten und verdrehten Sprinklervorrichtung erhöhen. Durch einen spitzen Winkel zwischen sich und der Außenumfangsfläche des Rohrelements erzeugende Rastelemente kann deren Position nach dem Einstecken und Verdrehen noch genauer definiert werden. Insbesondere wird durch die Eigenkraft der Sprinklervorrichtung, das heißt seiner Gewichtskraft, sichergestellt, dass dieser an seinen nach unten, das heißt in Richtung der Gewichtskraft zeigenden Kanten, an dem Gegenstück der Rohrleitung anliegt. Sind nun diese Kanten entsprechend geneigt, wird einem radialen Verrutschen der Sprinklervorrichtung entgegengewirkt.

Nach einer Weiterbildung der Sprinklervorrichtung kann der Sprinklerkopf ferner einen Sprühteller aufweisen, der am Rahmenelement befestigt ist. Die mit Flüssigkeit befüllte Glasampulle kann dabei an dem mit dem Sprühteller verbundenen Abschnitt des Rahmenelements anliegen.

Durch ein Anbringen eines Sprühtellers an der erfindungsgemäßen Sprinklervorrichtung wird deren Wirkungsweise durch das Zerstreuen des Wassers über einen größeren Bereich verbessert. Durch das Ausbilden des Sprühtellers direkt an dem Rahmenelement können auch hier weitere Schnittstellen, etwa durch zusätzliche Befestigungsmittel, vermieden werden. Zudem ist es für die Wirkungsweise des Sprühtellers wichtig, in der Verlängerung der Mittelachse des Rohrelements ausgebildet zu sein. Hierdurch kann sichergestellt werden, dass ein entsprechend großer Anteil der Wassermenge auf den Sprühteller auftrifft, und somit zerstreut wird. Durch eine Ausbildung des Sprühtellers direkt am Rahmenelement, welches direkt, etwa sogar einstückig, mit dem Rohrelement verbunden ist, kann diese Beziehung auf einfache konstruktive Weise sichergestellt werden.

Nach einem weiteren, nicht beanspruchten Aspekt wird ein Anschlussstutzen ausgebildet. Der Anschlussstutzen weist zumindest zwei in ihren Öffnungsebenen senkrecht zueinander stehende Rohranschlussöffnungen auf. Jede Rohranschlussöffhung weist dabei einen sich daran einstückig anschließenden, zylindrisch verlaufenden Korpus auf. Der Anschlussstutzen ist dadurch gekennzeichnet, dass an einer Innenumfangsfläche des Korpus einer ersten Rohranschlussöffnung der zumindest zwei Rohranschlussöffnungen von der ersten Rohranschlussöffnung beabstandete, zumindest teilweise umlaufende, erste Nutabschnitte ausgebildet sind. Diese ersten Nutabschnitte sind mit in Umfangsrichtung voneinander beabstandeten, vorzugsweise einander radial gegenüberliegenden, ersten Ausnehmungen verbunden, die sich von den ersten Nutabschnitten axial bis zu der Öffnungsebene der ersten Rohranschlussöffnung erstrecken. Weiter sind an einer Innenumfangsfläche des Korpus zumindest einer zweiten Rohranschlussöffnung der zumindest zwei Rohranschlussöffnungen Haltemittel ausgebildet.

Durch diesen Anschlussstutzen kann die Sprinklervorrichtung schnell mit bereits bestehenden Rohrleitungen verbunden werden. Der Anschlussstutzen weist hierzu sowohl eine Rohranschlussöffnung zum Anbringen der Sprinklervorrichtung als auch eine Rohranschlussöffnung zum Anbringen des Anschlussstutzens selbst an einem bestehenden Rohrsystem auf.

Herkömmliche Rohrsysteme, welche etwa bereits an einem Installationsort der Sprinkleranlage verbaut sind, können durch den Anschlussstutzen einfach nachgerüstet werden. So kann der Anschlussstutzen mit der jeweiligen Rohrleitung mittels aus dem Stand der Technik bekannter Verfahren, etwa durch Verschrauben des Rohrstutzens an der Rohrleitung über entsprechende Gewinde, die mittels Hanf oder Teflonbändern abgedichtet werden, durch Verschweißen oder dergleichen verbunden werden.

Ebenso kann eine Steck-Dreh-Verbindung ähnlich der Verbindung zwischen Sprinklerdüse und Anschlussstutzen zwischen dem Anschlussstutzen und den jeweiligen Rohrleitungen ausgebildet werden. Diese Art der Verbindung bringt neben der zeitlichen Ersparnis bei der Integration des Anschlussstutzens an den Rohrleitungen weitere Vorteile mit sich. Insbesondere lassen sich hierbei neben der deutlich kürzeren Installationszeit spürbare Einsparungen beim Material erzielen, beispielsweise durch den Wegfall zusätzlicher Dichtmittel wie dem Hanf und dergleichen. Im Gegensatz zu herkömmlich bekannten Schweißverfahren ist diese Verbindung zudem lösbar ausgebildet, so dass auch hier unter Verwendung einer Steck-Dreh-Verbindung zwischen Anschlussstutzen und Rohrleitung bei der Wartung Zeit und Material eingespart werden kann, da eine einmal geschweißte Verbindung nicht aufgeschnitten werden muss. Auch dies führt zu einer Kostenreduktion der gesamten Sprinkleranlage.

Hiermit ist zum Anbringen der Sprinklervorrichtung nur ein zusätzliches Element, der Anschlussstutzen nötig. Damit lassen sich die Gesamtkosten, welche zur Verwendung der Sprinklervorrichtung anfallen, gering halten, da sich sowohl die Herstellkosten auf den zusätzlichen Anschlussstutzen beschränken und zudem die Montagezeit gering gehalten wird, da nur ein Element zum Anschließen der Sprinklervorrichtung an Rohrleitungen notwendig ist.

Zudem kann durch eine derartige Ausgestaltung des Anschlussstutzens der Einsatzbereich der Sprinklervorrichtung erhöht werden. Da die Anschlussgeometrien von Sprinklervorrichtung und Rohrleitung bei dem Anschlussstutzen unabhängig voneinander ausgestaltet sind, kann die Geometrie, das heißt sowohl die Art der Verbindung mit einer Rohrleitung als auch die entsprechenden Größenverhältnisse variiert werden, während die Geometrie zur Verbindung mit der Sprinklervorrichtung gleich bleibt. Der Herstellprozess kann so trotz sich verändernder Randbedingungen weitgehend unverändert bleiben.

Durch die Ausbildung von ersten Ausnehmungen, welche sich bis zur Öffnungsebene der ersten Rohranschlussöffnung erstrecken und mit umlaufenden Nutabschnitten verbunden sind, kann die Ausbildung der Verbindung, welche sich an die erste Rohranschlussöffnung anschließt durch Steuern einer Bearbeitungsmaschine entlang nur zweier, senkrecht zueinander stehender Achsen erfolgen. Der Herstellprozess ist somit möglichst einfach gehalten.

Nach einer Weiterbildung des Anschlussstutzens können als Haltemittel der zumindest einen zweiten Rohranschlussöffnung von der zweiten Rohranschlussöffnung beabstandete, zumindest teilweise umlaufende zweite Nutabschnitte ausgebildet sein. Diese zweiten Nutabschnitte sind mit in Umfangsrichtung voneinander beabstandeten, vorzugsweise einander radial gegenüberliegenden, zweiten Ausnehmungen verbunden, die sich von den zweiten Nutabschnitten axial bis zur Öffnungsebene der zweiten Rohranschlussöffnung erstrecken.

Durch die Ausbildung einer erfindungsgemäßen Steck-Dreh-Verbindung nicht nur zwischen Sprinklervorrichtung und Anschlussstutzen sondern ebenso zwischen Anschlussstutzen und Rohrleitung, kann die Montagezeit weiter reduziert werden. Werden im Stand der Technik häufig rohrschellenartige Verbindungselemente verwendet, welche mittels zusätzlicher Werkzeuge zuerst am Rohr angebracht werden müssen, kann hier der Anschlussstutzen direkt über entsprechend ausgebildeten Rohröffnungen aufgesteckt und verdreht werden. Denkbar ist bei diesem Vorgehen auch, die Sprinklervorrichtung bereits in dem Anschlussstutzen anzubringen, bevor selbiger an der Rohrleitung angebracht wird. Hierdurch kann die Montagezeit zwischen Anschlussstutzen und Rohrleitung von der Montagezeit zwischen Anschlussstutzen und Sprinklervorrichtung entkoppelt werden. Beispielsweise kann die Sprinklervorrichtung an einem vom späteren Montageort der Sprinkleranlage bereits im Anschlussstutzen angebracht sein.

Durch den Anschlussstutzen sind zudem bei der Montage keine weiteren Werkzeuge notwendig. So ist es möglich sowohl die Sprinklervorrichtung per Hand über die Steck-Dreh-Verbindung an dem Anschlussstutzen anzubringen als auch den Anschlussstutzen selbst über die Steck-Dreh-Verbindung per Hand an der Rohrleitung zu befestigen.

Nach einem weiteren Aspekt des Anschlussstutzens kann als Haltemittel der zumindest einen zweiten Rohranschlussöffnung ein als Innengewinde ausgebildeter Befestigungsabschnitt ausgebildet sein.

Nach dieser Weiterbildung des Anschlussstutzens wird der Einsatzbereich des Anschlussstutzens und somit der Sprinklervorrichtung erweitert. Durch das am Innenumfang des sich an die zweite Rohranschlussöffnung anschließenden Befestigungsabschnitts ausgebildete Innengewinde kann der Anschlussstutzen leicht mit bereits bestehenden Rohleitungen verschraubt werden.

Nach einem weiteren Aspekt der Erfindung wird ein Sprinklersystem nach Anspruch 7 vorgeschlagen. Das Sprinklersystem weist dabei die vorstehend diskutierte Sprinklervorrichtung und den vorstehend diskutierten Anschlussstutzen auf. Dabei sind die Rastelemente der Sprinklervorrichtung derart über die ersten Ausnehmungen der ersten Rohranschlussöffnung in die ersten Nutabschnitte des Anschlussstutzens einbringbar, dass zumindest ein Teilbereich des Rohrelements des Sprinklerkopfs in den Anschlussstutzen einfügbar sowie anschließend zur Befestigung des Sprinklerkopfs am Anschlussstutzen relativ zu diesem verdrehbar ist. Zudem ist vermittels des an dem Anschlussstutzen ausgebildeten Haltemittels ein Rohrstück an dem Anschlussstutzen anbringbar.

Durch die erfindungsgemäße Ausgestaltung der Sprinklervorrichtung und des Anschlussstutzens kann ein System ausgebildet werden, welches die Montagezeit bei der Installation einer Sprinkleranlage stark verkürzt. Durch die große Anzahl an Sprinklerdüsen, welche etwa in Lagerräumen anzubringen sind, ist durch die Verkürzung dieser vielfach auszuführenden Handlung eine für die Gesamtinstallationszeit relevante Einsparung möglich. Zudem ist die Montage ohne weitere Werkzeuge möglich, wodurch sich die von dem Monteur über dem Kopf zu haltende Gewichtskraft auf Anschlussstutzen, bzw. Sprinklervorrichtung beschränkt. Durch die sich für den Monteur ergebenden Erleichterungen werden daher Fehler reduziert, wodurch die Sicherheit der Sprinkleranlage erhöht werden kann.

Nach einer Weiterbildung des Sprinklersystems kann in einem Teilbereich einer Wandung des Korpus zumindest einer der zumindest zwei Rohranschlussöffnungen eine Bohrung ausgebildet sein. Diese Bohrung kann dabei vorzugsweise durch zumindest eine der Nutabschnitte, radial durch den Teilbereich der Wandung des Korpus zumindest teilweise nach außen verlaufen. In dieser Bohrung kann ein separat ausgebildetes oder an der Sprinklervorrichtung oder dem Rohrstück ausgebildetes Sicherungselement verlaufen.

Durch die Bohrungen an dem Anschlussstutzen kann sowohl eine Sicherung der Sprinklervorrichtung an dem Anschlussstutzen als auch eine Sicherung der Rohrleitung an dem Anschlussstutzen hergestellt werden. Dadurch beschränken sich die zur Sicherung notwendigen Arbeitsschritte des Herstellprozesses nur auf die Herstellung des Anschlussstutzens. Die Herstellzeit der Sprinklervorrichtung bleibt somit unberührt.

Das Sicherungselement kann zudem nicht nur ein Verdrehen der Elemente zueinander verhindern, zusätzlich kann durch das Sicherungselement das Erreichen einer bestimmten Position erfasst werden. Etwa ist ein Einschrauben des Sicherungselements nur in einer bestimmten Position des Anschlussstutzens zu der Sprinklervorrichtung möglich. Hierdurch kann die Montage erleichtert werden, da durch das Sicherungselement die vorschriftsmäßige Befestigung überprüft werden kann. Somit lässt sich die Sicherheit der gesamten Sprinkleranlage erhöhen.

### Kurze Beschreibung der Zeichnung

Die Merkmale und Vorteile sowie die technische und wirtschaftliche Bedeutung beispielhafter Ausführungsformen der vorliegenden Erfindung werden nachfolgend Bezug nehmend auf die beigefügten Zeichnungen beschrieben, hierbei zeigt:
- Fig. 1: eine perspektivische Prinzipdarstellung einer Ausführungsform einer erfindungsgemäßen Sprinklervorrichtung;
- Fig. 2: eine perspektivische Prinzipdarstellung einer Ausführungsform einer erfindungsgemäßen Sprinklervorrichtung aus der Richtung des Rahmenelements;
- Fig. 3: eine perspektivische Prinzipdarstellung einer Ausführungsform eines Anschlussstutzens;
- Fig. 4: eine perspektivische Prinzipdarstellung einer weiteren Ausführungsform eines Anschlussstutzens;
- Fig. 5: eine perspektivische Ansicht eines Sprinklersystems, welches an einem Rohrstück angebracht ist; und
- Fig. 6: eine perspektivische Prinzipdarstellung eines Rohrleitungssystems.

### Detaillierte Beschreibung der Ausführungsformen

Nachfolgend werden Ausführungsformen der Erfindung im Detail mit Bezug auf die beigefügten Zeichnungen beschrieben werden.

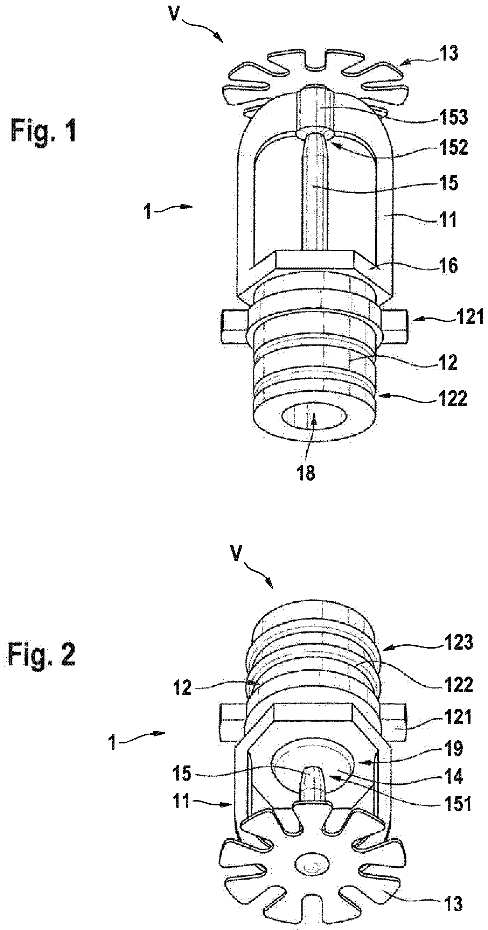

Es zeigt Fig. 1 eine Ausführungsform einer erfindungsgemäßen Sprinklervorrichtung V bestehend aus einem Sprinklerkopf 1, welcher ein Rohrelement 12 sowie ein mit diesem Rohrelement 12 einstückig verbundenes Rahmenelement 11 aufweist. Das Rohrelement 12 ist hier ein Rohrstück mit einer Durchgangsöffnung, die sich durch das gesamte Rohrelement 12 entlang der Achsenrichtung bzw. Axialrichtung erstreckt. Eine in der Fig. 1 gezeigte untere Öffnung des Rohrelements 12 ist die Wassereinlassöffnung 18. Durch die Wassereinlassöffnung 18 gelangt das in einem mit dem Sprinklerkopf 1 verbundenem Rohrleitungssystem geführte Wasser in das Rohrelement 12 der Sprinklervorrichtung V.

Die der Wassereinlassöffnung 18 in Axialrichtung des Rohrelements 12 gegenüberliegende Öffnung ist als eine Wasserauslassöffnung 19 ausgebildet. Durch diese Wasserauslassöffnung 19 kann das Wasser aus dem Rohrleitungssystem über die Wassereinlassöffnung 18 aus dem Rohrelement 12 ausgelassen werden.

An der Seite der Wasserauslassöffnung 19 des Rohrelements 12 schließt ein Rahmenelement 11 an. Das Rahmenelement 11 setzt an zwei in radialer Richtung gegenüberliegenden Abschnitten des Rohrelements 12 an. Ausgehend von diesen zwei Abschnitten erstreckt sich das Rahmenelement 11 über zumindest zwei Schenkel in Axialrichtung des Rohrelements 12 weiter nach oben, das heißt von dem Rohrelement 12 weg. Das obere Ende des Rahmenelements 11 ist durch einen Verbindungsbereich 153 gekennzeichnet, in dem die sich zu beiden Seiten erstreckenden Schenkel zusammenführen.

Dieser Bereich, das heißt der Verbindungsbereich 153 der zu beiden Seiten symmetrisch verlaufenden Schenkel, liegt dabei der Wasserauslassöffnung 19 in der verlängerten Mittelachse des Rohrelements 12 gegenüber. In dem Verbindungsbereich 153 des Rahmenelements 11 ist dabei eine Durchgangsbohrung ausgebildet. Auch die Achse dieser Durchgangsbohrung verläuft entlang der verlängerten Mittelachse des Rohrelements 12. Mittels dieser Durchgangsbohrung kann eine Glasampulle 15, deren Funktionsweise später beschrieben wird, an dem Rahmenelement 11 befestigt werden. In der hier dargestellten Ausführungsform sind das Rahmenelement 11 und das Rohrelement 12 einstückig ausgebildet. Das Material dieser Elemente ist dabei sowohl als temperaturbeständig als auch druckbeständig auszuwählen.

In dieser Ausführungsform sind das Rahmenelement 11 und das Rohrelement 12 aus Messing gebildet, können etwa aber auch aus Edelstahl, Aluminium oder anderem korrosionsbeständigem Metall hergestellt sein. An dem Rohrelement 12 sind in der hier dargestellten Ausführungsform zwei sich am Außenumfang in Umfangsrichtung erstreckende Nuten 122 ausgebildet. Die Anzahl der am Außenumfang ausgebildeten Nuten 122 kann dabei variieren. Beispielsweise kann nur eine Nut 122 oder es können auch beispielsweise drei Nuten 122 ausgebildet sein. Weiter sind am Außenumfang des Rohrelements 12 Rastelemente 121 ausgebildet.

In der hier dargestellten Ausführungsform sind die Rastelemente 121 als Quaderstücke ausgeführt, welche sich radial in Bezug zur Mittelachse des Rohrelements 12 nach außen, von dem Außenumfang des Rohrelements 12 weg, erstrecken. Die Rastelemente 121 sind hier einstückig mit dem Rohrelement 12 ausgebildet, können aber auch nachträglich an diesem angebracht werden. Beispielsweise können die Rastelemente 121 über Bohrungen in das Rohrelement 12 eingeschraubt werden. Dabei können Whitworthgewinde und entsprechende Fittings verwendet werden. Zudem können Dichteelemente, etwa als Abdichtband oder Hanf, vorgesehen werden. Ebenso können die Rastelemente 121 mit dem Rohrelement 12 verklebt oder verschweißt sein.

Dabei können die Rastelemente 121 aus demselben Material wie das Rohrelement 12 aber auch einem anderen Material ausgebildet sein. Die senkrecht zur Axialrichtung des Rohrelements 12 verlaufende Querschnittsfläche der Rastelemente 121 kann neben einer rechteckigen Form, wie in dem Beispiel des Quaderstücks ausgeführt, auch quadratisch, kreisförmig, oder polygonal ausgebildet sein. Beispielsweise können die Rastelemente 121 als Halbkugeln oder Stifte ausgebildet sein.

Die Rastelemente 121 sind hier auf einer gemeinsamen Ebene senkrecht zu der Axialrichtung des Rohrelements 12 angeordnet, können aber auch auf zueinander parallel versetzten Ebenen angeordnet sein. Die in Fig. 1 dargestellten Rastelemente 121 weisen in dieser Ausführungsform dieselbe Geometrie auf. Die Ausgestaltung der Rastelemente 121 ist jedoch nicht auf diese gleichförmige Gestalt beschränkt. So können derart verschiedenartige Rastelemente 121 ausgebildet sein, dass ein nachfolgend beschriebenes Einstecken des Sprinklerkopfs 1 in einen Anschlussstutzen 2 nur in einer Relativposition dieser Elemente zueinander erfolgen kann.

Im Gegensatz zu dem im Stand der Technik beschriebenen Sprinklerdüsen kann die erfindungsgemäße Sprinklervorrichtung V mittels dieser Rastelemente 121 an einem entsprechenden Gegenstück, dem Anschlussstutzen 2, angebracht werden. Hierfür wird der Sprinklerkopf 1 mit seinem Rohrelement 12 voraus in den Anschlussstutzten 2 über die Rastelemente 121 geführt eingesteckt und anschließend verdreht. Die von dem Monteur durchzuführende Bewegung kann dabei auf eine Steck-Dreh-Bewegung reduziert werden, wobei sich die Drehbewegung je nach Anzahl der Rastelemente 121 sowie der Anzahl der komplementären Ausnehmungen in einem später beschriebenen Anschlussstutzen 2 auf eine Drehung von weniger als 180 Grad beschränkt. Der Monteur kann die Sprinklervorrichtung V somit ohne Umgreifen, wie es im Stand der Technik aufgrund der mehreren einzudrehenden Gewindegänge nicht möglich ist, durch eine schnelle Bewegung montieren.

Dabei können die Rastelemente 121 zum Erreichen einer bestimmten Relativposition zwischen Sprinklervorrichtung V und Anschlussstutzen 2 derart voneinander verschiedene Formen aufweisen, dass je ein Rastelement 121 in nur eine komplementäre Ausnehmung 212a am später beschriebenen Anschlussstutzen 2 passt. Beispielsweise kann ein Rastelement 121 mit dreieckförmigen Querschnitt und ein zweites Rastelement 121 mit rechteckförmigen Querschnitt ausgebildet sein. In dem hier dargestellten Beispiel sind zwei in Bezug auf die Axialrichtung des Rohrelements 12 gegenüberliegende Rastelemente 121 ausgebildet. Dabei können aber auch mehrere Rastelement 121, etwa im gleichen Winkelabstand zueinander, am Außenumfang des Rohrelements 12 ausgebildet sein.

Um eine gleichmäßige Kraftverteilung auf den Sprinklerkopf 1 bei der Montage aufzubringen, ist es zu bevorzugen, dass die Rastelemente 121 im gleichen Winkelabstand zueinander ausgebildet sind. Dieser Winkelabstand kann aber auch variiert werden. Ein oberer Teilbereich 16 des Rohrelements 12, das heißt ein Randbereich, welcher bezogen auf den Abstand in der Axialrichtung des Rohrelements 12 von der Wassereinlassöffnung 18 weiter entfernt liegt als die Nuten 122 und die Rastelemente 121 ist an seinem Außenumfang polygonal ausgebildet. Mit anderen Worten bildet dieser, in dieser Ausführungsform sechskantig ausgebildete Teilbereich 16 somit den Randbereich des Rohrelements 12 aus, an welchem das Rahmenelement 11 mit dem Rohrelement 12 verbunden ist.

Wie oben beschrieben ist, können als Grundmaterial der Sprinklervorrichtung V, das heißt als Material für Rahmenelement 11 und Rohrelement 12 verschiedene Metalle, wie Messing, Eisen, Aluminium oder Legierungen Anwendung finden. Die Grundform der Sprinklervorrichtung V, welche sich aus dem Rahmenelement 11, dem polygonalen Teilbereich 16 des Rohrelements 12, dem Rohrelement 12 selbst und daran ausgebildeten Rastelementen 121 zusammensetzt, kann dabei durch Umformen, etwa Schmieden hergestellt werden. Alternativ kann diese Grundform mittels Urformen, etwa Gießen erreicht werden. Auch können Teilbereiche, etwa das Rahmenelement 11 und das Rohrelement 12 separat als Guss- oder Schmiedeteil hergestellt und anschließend verschweißt werden. Es ist auch denkbar, derlei geometrische Formen mittels 3D-Druck, etwa selektives Laserschmelzen oder Elektronenstrahlschmelzen, herzustellen.

Als weitere Alternative kann ein Grundkörper ohne Hohlraum mittels Gießen oder Schmieden hergestellt werden. Aus diesem Vollmaterial kann anschließend mittels spanabhebender Bearbeitung das Rohrelement 12 und/oder das Rahmenelement 11 ausgebildet werden. Dabei wird beispielsweise durch ein Aufbohren und anschließendes Drehen oder Fräsen der Innenfläche, etwa mittels Scheibenfräser, der Innenumfang des Rohrelements 12 als ein entlang der Mittelachse durchdringender rohrförmiger Abschnitt hergestellt.

Anschließend, zeitgleich oder vor diesem Arbeitsschritt kann die Außenfläche des Rohrelements ebenfalls drehend bearbeitet werden. Wenn die Rastelemente 121 in der Grundform des Sprinklerkopfs 1 der Sprinklervorrichtung V, etwa durch eine entsprechende Negativform, beispielsweise Kokillenform beim Gießen, noch nicht ausgebildet sind, erfolgt diese Bearbeitung im Rahmen der Bearbeitung der Außenfläche des Rohrelements 12. Ebenso wird hier die zumindest eine Nut 122 als Umfangsvertiefung am Außenumfang des Rohrelements 12 spanabhebende herausgearbeitet.

Diese zumindest eine Nut 122 ist dabei in Axialrichtung weiter von dem Rahmenelement 11, beziehungsweise der Wasserauslassöffnung 19, beabstandet als die Rastelemente 121. Die Oberflächenbeschaffenheit der einzelnen Abschnitte kann dabei variieren. So kann beispielsweise nur eine Bearbeitung der Oberfläche des Rohrelements 12 ausgehend von der Wassereinlassöffnung 18 bis einschließlich der zumindest einen Nut 122 erfolgen, so dass das Dichtungselement 123 beim Aufstecken nicht durch eine zu hohe Rauigkeit der Oberfläche beschädigt wird. Dabei kann die Oberfläche der weiteren Abschnitte des Sprinklerkopfs 1 unbearbeitet bleiben. Alternativ können auch weitere Bereiche, wie etwa die Seitenflächen des Rastelements 121, welche zu beiden Seiten in Axialrichtung des Rohrelements 12 zeigen, mit anderen Worten senkrecht zu dieser stehen, bearbeitet werden.

Insbesondere kann die Oberfläche der Seitenflächen der Rastelemente 121 derart bearbeitet werden, dass der beim Eindrehen des Sprinklerkopfs 1 in den Anschlussstutzen 2 entstehende Reibwiderstand möglichst gering ist. Wie zuvor beschrieben wurde, ist eine Seite der Glasampulle 15 an dem Rahmenelement 11 befestigt. Die zweite, gegenüberliegende Seite der Glasampulle 15 wird mittels eines Verschlusselements 14 gehalten. Dieses Verschlusselement 14 ist in den Innenumfang des Rohrelements 12 an der Wasserauslassöffnung 19 als Stopfen eingesetzt. Damit verschließt das Verschlusselement 14 über die Glasampulle 15 in seiner Position gehalten, die Wasserauslassöffnung 19.

Die Oberfläche des Innenumfangs des Rohrelements 12 kann zur Aufnahme des Verschlusselements 14 derart bearbeitet werden, dass etwa eine Pressverbindung zwischen dem in das Rohrelement 12 eingefügten Verschlusselements 14 und dem Innenumfang des Rohrelements 12 hergestellt werden kann. Das Verschlusselement 14 sowie der anschließend am Rahmenelement 11, beispielsweise mittels einer Schraubverbindung, Schweißverbindung oder Klebverbindung angebrachte Sprühteller 13 können dabei aus dem gleichen Material wie der Grundkörper des Sprinklerkopfs 1 gefertigt sein, aber auch aus einem hierzu verschiedenen Material bestehen.

Fig. 2 zeigt einen erfindungsgemäßen Sprinklerkopf 1 aus der Richtung des Rahmenelements 11. Wie in dieser Figur zu sehen ist, sind in den Nuten 122 am Rohrelement 12 zwei Dichtungselemente 123 eingefügt. Die Anzahl der Dichtungselemente 123 ist allerdings nicht beschränkt und kann entsprechend der Anzahl der Nuten 122 variieren. Mittels dieser Dichtungselemente 123 wird der Spalt, der zwischen dem Außenumfang des Rohrelements 12 der Sprinklervorrichtung V und einem Innenumfang des Anschlussstutzens 2 entsteht, derart abgedichtet werden, dass in der Rohrleitung unter hohem Druck stehendes Wasser nicht durch diesen Spalt austreten kann. Als Dichtungselemente 123 sind in dieser Ausführungsform O-Ringe ausgebildet, wobei die O-Ringe aus Kautschuk herstellt sein können. Alternativ können anstelle von O-Ringen auch andere Dichtungselemente, etwa X-Ringe oder Rundschnüre ausgebildet sein.

Wie in Fig. 2 zudem zu sehen ist, ist die Wasserauslassöffnung 19 durch ein Verschlusselement 14 verschlossen. Das Verschlusselement 14 wird über ein erstes Ende 151 der Glasampulle 15 in der Wasserauslassöffnung 19 gehalten. Wie zuvor beschrieben ist, wird das zweite Ende 152 der Glasampulle 15 an dem Schnittpunkt 153 der Schenkel des Rahmenelements 11 gehalten. Die als Verschluss dienende Glasampulle 15 ist dabei mit einer gefärbten Spezialflüssigkeit gefüllt, die ihrerseits eine Luftblase enthält. An der Raumdecke oder im oberen Bereich von Seitenwänden, wo die Sprinkleranlage V montiert ist, sind wie vorstehend erwähnt mehrere Sprinklerköpfe 1 angebracht, die mit einem Wasserrohrnetz verbunden sind.

Innerhalb des Sprinklersystems S herrscht ein konstanter Wasserdruck, der in der Sprinklerzentrale kontrolliert wird. Bei einem Feuer erwärmt sich die Flüssigkeit in den sich in der Nähe befindlichen Glasampullen 15 und dehnt sich aufgrund der steigenden Temperatur soweit aus, bis die Glasampullen 15 platzen, wodurch die Wasserauslassöffnungen 19 geöffnet werden und Wasser aus dem Sprinklerrohrnetz austritt. Bei einem Brand öffnen dabei jedoch nur die Wasserauslassöffnungen 19 der Sprinklervorrichtung V, deren Glasampullen 15 die Auslösetemperatur erreicht haben.

Je nach Anwendungsbereich der Sprinkleranlage kann hierbei eine andere, vorab definierte Temperatur zu einem Zerspringen der Glasampulle 15 führen. Die Auslösetemperatur hängt dabei von der Größe der eingeschlossenen Luftblase ab und wird in der Regel über die Farbe der Flüssigkeit in der Glasampulle 15 gekennzeichnet. Im Durchschnitt liegt die Auslösetemperatur bei etwa 30 °C über der zu erwartenden Raumtemperatur. Nachdem die Glasampulle 15 zersprungen ist, wird das Verschlusselement 14 daher nicht mehr durch die Glasampulle 15 in der Wasserauslassöffnung 19 gehalten und fällt aufgrund seiner Gewichtskraft heraus, beziehungsweise wird durch den in dem Rohrleitungssystem herrschenden Wasserdruck aus dem Rohrelement 12 gedrückt.

Durch die nun nicht mehr verschlossene Wasserauslassöffnung 19 kann nun Wasser an die Umgebung ausgelassen werden. In der Axialrichtung des Rohrelements 12 der Wasserauslassöffnung 19 gegenüberliegenden Seite des Rahmenelements 11 kann zudem ein Sprühteller 13 ausgebildet sein. Dieser kann direkt am Rahmenelement 11 oder über ein Verbindungselement, etwa eine Schraube, Niete oder Klebverbindung, an diesem angebracht sein. Trifft nun das aus der Wasserauslassöffnung 19 ausströmende Wasser auf den Sprühteller 13, wird es dort entsprechend der Geometrie des Sprühtellers 13 über einen größeren Bereich zerstreut. Hierbei ist es zu bevorzugen, dass der Sprühteller 13 eine möglichst große, beispielsweise kammartig ausgebildete, Umfangsfläche aufweist, so dass das vorbeiströmende Wasser großflächig verteilt wird.

In einer anderen Ausführungsform wird das Verschlusselement 14 in dem Rohrelement 12 axial verschiebbar gehalten und ist bei dieser Ausführungsform konisch ausgebildet. Um eine axiale Verschiebung des Verschlusselements 14 zuzulassen, sind beispielsweise am Innenumfang des Rohrelements 12 Führungsnuten ausgebildet. Diesen Führungsnuten entsprechend können an dem konisch ausgebildeten Verschlusselement 14 Führungszähne ausgebildet sein. Diese können über Federn, welche etwa in Bohrungen in dem Verschlusselement 14 ausgebildet sind, vorgespannt sein.

Bei einer axialen Verschiebung des Verschlusselements 14, etwa unmittelbar nach einem Zerspringen der Glasampulle 15, bewegen sich diese Führungszähne in Umfangsrichtung durch die Federkraft nach außen, so dass die Führungszähne in den Führungsnuten gehalten werden, und das Verschlusselement 14 geführt nach unten verschoben werden kann. Mit anderen Worten wird das Verschlusselement 14 nach dem Zerplatzen der Glasampulle 15 durch den im Rohrleitungssystem herrschenden Druck nach unten verschoben. Die Führungsnuten erstrecken sich dabei axial in nur einem Teilbereich des Innenumfangs des Rohrelements 12, so dass das Verschlusselement 14 nicht aus dem Rohrelement 12 fallen kann, sondern durch eine axiale Begrenzung der Führungsnuten in seiner Bewegung beschränkt wird.

Zerplatzt bei dieser Ausführungsform wie oben beschrieben die Glasampulle 15, so wird das Verschlusselement 14 nach unten gedrückt, wodurch sich aufgrund der konischen Form des Verschlusselements 14 ein ringförmiger Hohlraum zwischen Innenumfang des Rohrelements 12 und Außenumfang des Verschlusselements 14 ausbildet. Durch diesen Hohlraum kann nur das Wasser aus der Wasserauslassöffnung 19 ausgelassen werden und durch die konische Form des Verschlusselements 14 zerstreut werden. Die Form des Verschlusselements 14 bestimmt dabei die Strömungsrichtung und flächenmäßige Ausbreitung und kann daher ebenso am unteren Außenumfang eine kammartige Kontur oder ähnliches aufweisen.

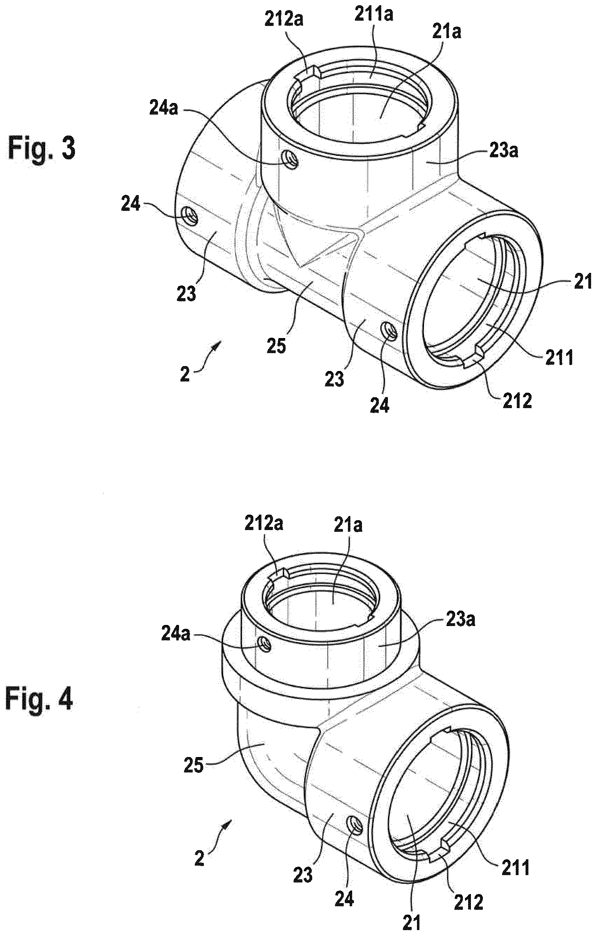

Fig. 3 zeigt eine Ausführungsform eines Anschlussstutzens 2. Der hier dargestellte Anschlussstutzen 2 weist drei Rohranschlussöffnungen 21, 21a auf. Dabei sind die sich gegenüberliegenden Rohranschlussöffnungen 21 zur Verbindung mit einem Rohrstück R eines Rohrleitungssystem ausgebildet, während die senkrecht zu den zwei Rohranschlussöffnungen 21 stehende Rohranschlussöffnung 21a zur Verbindung des Anschlussstutzens 2 mit dem Sprinklerkopf 1 der Sprinklervorrichtung V ausgebildet ist. Hierzu sind entsprechend den Rastelementen 121 Ausnehmungen 212a an einem Innenumfang des Anschlussstutzens 2 ausgebildet.

Der Anschlussstutzen 2 weist sich jeweils an die Rohranschlussöffnung 21, 21a anschließende Korpusse 23, 23a auf. In der hier dargestellten Ausführungsform sind die Korpusse 23, 23a jeweils einstückig als Teil des Anschlussstutzens 2 ausgebildet. Dabei kann der Grundkörper des Anschlussstutzens 2 mittels Urformen, etwa Gießen oder mittels Umformen, etwa Schmieden hergestellt werden. Ausgehend von diesem Anschlussstutzengrundkörper können die zylindrischen Hohlabschnitte des späteren Anschlussstutzens 2 von den Endbereichen aus mittels drehender oder fräsender Bearbeitung ausgebildet werden. Alternativ ist auch denkbar, derlei geometrische Formen mittels 3D-Druck, etwa selektives Laserschmelzen oder Elektronenstrahlschmelzen, herzustellen.

Die zylindrischen Hohlabschnitte sind derart miteinander verbunden, dass der spätere Anschlussstutzen 2 einen einzigen, das heißt zu jeder der später ausgebildeten Rohranschlussöffnungen 21, 21a durchgängigen, Hohlraum aufweist. Alternativ können die Hohlräume durch entsprechende Kerne beim Gießen oder Gesenke beim Schmieden bereits im Anschlussstutzengrundkörper ausgebildet sein, so dass nur die Oberflächen zur Ausbildung der zylindrischen Hohlabschnitte bearbeitet werden müssen. Anschließend erfolgt die Bearbeitung der Endabschnitte. Je nach Ausführungsform des Anschlussstutzens 2 als T-Stück oder Winkel-Stück oder ähnlichem werden die entsprechenden Endabschnitte bearbeitet.

Dabei wird an einem Endabschnitt die Rohranschlussöffnung 21a zum Verbinden mit der Sprinklervorrichtung V ausgebildet, während an dem zumindest einem zweiten Endabschnitt die Rohranschlussöffnung 21 zum Verbinden mit einem Rohrstück R eines Rohrleitungssystems ausgebildet wird. Ausgehend von der Ebene der Rohranschlussöffnung 21a an dem Korpus 23a werden die Ausnehmungen 212a als sich senkrecht zur Achse des Rohrelements 12 ausgebildete nach Innen parallel zur Achse erstreckende Vertiefungen gefräst. Nachfolgend wird an je einer Ausnehmung 212a ein Nutabschnitt 211a ausgebildet.

Dabei kann die Reihenfolge des Herstellverfahrens derart verändert werden, dass zuerst ein Nutabschnitt 211a und anschließend die entsprechende Ausnehmung 212a ausgebildet wird. Die Bearbeitung der Nutabschnitte 211a kann etwa mittels Scheibenfräser erfolgen. Je nach Verbindungsart zwischen dem Rohrstück R und Anschlussstutzen 2 kann die Bearbeitung der Innenfläche des zumindest einen Korpus 23 entsprechend der Bearbeitung des Korpus 23a zur Ausbildung von Nutabschnitten 211 und Ausnehmungen 212 erfolgen. Alternativ kann an der Innenfläche des Korpus 23 ein Gewinde mittels Gewindeschneider ausgebildet werden. Abschließend können etwa spanabhebende Bearbeitungsschritte zur Verringerung der Oberflächenrauigkeit erfolgen. Weiter können auch die Oberflächeneigenschaften verändernde Verfahrensschritte, wie Beschichten, an dem Anschlussstutzen 2 und dem Sprinklerkopf 1 durchgeführt werden.

Insbesondere kann die Innenumfangsfläche des Korpus 23a bearbeitet werden, so dass die Oberflächengüte derart beschaffen ist, dass die Dichtungselemente 123 bei Einfügen des Rohrelements 12 nicht beschädigt werden. Auch können Bohrungen 24, 24a, in welchen Innengewinde ausgebildet sind, senkrecht zu der Achse der Korpusse 23, 23a eingefügt werden. Diese Bohrungen 24, 24a können dabei beispielsweise an einer Stelle am Korpus 23a ausgebildet werden, dass sie in den Nutabschnitten 211a am Innenumfang des Korpus 23a enden. Beispielsweise können die Bohrungen 24a an einer Position in den Nutabschnitten 211a enden, so dass bei eingefügtem Sprinklerkopf 1 eine durch die Bohrung 24a eingefügte Schraube zwischen Rastelement 121 und zugehöriger Ausnehmung 212a liegt.

Ein Herausdrehen der Sprinklervorrichtung V aus dem Anschlussstutzen 2 kann bei dieser Ausführungsform erst nach entsprechendem Herausdrehen der Schraube aus der Bohrungen 24a erfolgen. Die durch die Bohrungen 24, 24a eingefügte Schraube dient somit der Positionsbestimmung, bzw. Positionssicherung. Dabei kann der Bohrung 24, 24a eine entsprechend komplementäre Geometrie an dem Außenumfang des Sprinklerkopfs 1, bzw. des Rohrstücks R, etwa in Form einer weiteren Bohrung mit Innengewinde oder einfachen Vertiefung, im ordnungsgemäß eingefügtem Zustand gegenüberliegen, so dass die Schraube nur in diesem ordnungsgemäß einfügten Zustand eingeschraubt werden kann.

Auch kann die Bohrungen 24a in dem Korpus 23a derart ausgebildet sein, dass sie sich ausgehend von dem Innenumfang des Korpus 23a radial nach außen nur über einen Teilbereich der Wandstärke des Korpus 23a erstreckt. In dieser Bohrung 24a kann ein über eine Feder vorgespannter Stift eingefügt sein, welcher in eine entsprechende Bohrung in dem Sprinklerkopf 1 einrasten kann.

Die Kanten des Anschlussstutzens 2 sowie der Sprinklervorrichtung V können entsprechend entgratet werden. Ähnlich zu der Sprinklervorrichtung V muss der Anschlussstutzen 2 dabei jedoch nicht einstückig ausgebildet sein, sondern kann aus einzelnen, miteinander verschraubten oder verschweißten Einzelteilen zur Ausbildung des Anschlussstutzengrundkörpers zusammengesetzt werden. Der Anschlussstutzen 2 ist in dieser Ausführungsform aus Edelstahl hergestellt, kann aber auch aus anderen korrosionsbeständigen Metallen, etwa aus Messing oder Aluminium, beziehungsweise einer Legierung bestehen. Die Rohröffnungen 21, 21a erstrecken sich in das Innere des Anschlussstutzens 2, so dass der Anschlussstutzen 2 dieser Ausführungsform einen etwa T-förmigen Hohlraum aufweist.

An dem sich von der Rohranschlussöffnung 21a erstreckendem Innenumfang des Korpus 23a sind Ausnehmungen 212a sowie Nutabschnitte 211a eingearbeitet. Die Ausnehmungen 212a sind dabei entsprechend der Geometrie der Rastelemente 121 des Sprinklerkopfs 1 ausgebildet. Dabei erstrecken sich die Ausnehmungen 212a parallel zu der Mittelachse des Korpus 23a ausgehend von der Ebene der Rohranschlussöffnung 21a in das Innere des Anschlussstutzens 2. Die Verlaufsrichtung der Ausnehmungen 212a muss dabei nicht parallel zu der Mittelachse des Korpus 23a erfolgen, sondern kann auch schräg zu dieser verlaufen.

Die Ausnehmungen 212a stellen dabei eine Vertiefung des Innendurchmessers des Korpus 21a dar, welche beispielsweise einen rechteckigen Querschnitt aufweisen. Die Ausnehmungen 212a erstrecken sich ferner derart, dass sie in den Nutabschnitten 211a münden. Auch diese Nutabschnitte 211a stellen Vertiefungen des Innendurchmessers des Korpus 23a dar. Im Gegensatz zu den Ausnehmungen 212a erstrecken sich die Nutabschnitte 211a entlang der Umfangsrichtung des Korpus 23a und somit auf einer Ebene senkrecht zu der Verlaufsrichtung der Ausnehmungen 212a.

Die Tiefe der Ausnehmungen 212a und der Nutabschnitte 211a, das heißt der radiale Abstand zwischen Innenumfang des Korpus 23a in einem die Nutabschnitte 211a und Ausnehmungen 212a umgebenden Bereich zu dem Innenumfang des Korpus 23a, an welchem die Nutabschnitte 211a oder die Ausnehmungen 212a ausgebildet sind, kann identisch sein. Die Tiefe der Ausnehmungen 212a und der Nutabschnitte 211a können aber auch voneinander verschieden sein. So kann etwa die Tiefe der Ausnehmungen 212a größer ausgebildet sein als die der Nutabschnitte 211a. Auch ist die Verlaufsrichtung der Nutabschnitte 211a nicht auf die Umfangsrichtung beschränkt, sondern kann etwa schräg zu dieser so wie wellenförmig oder L-förmig verlaufen.

Die Kante der Nutabschnitte 211a, welche von der Ebene der Rohranschlussöffnung 21a am weitesten entfernt liegt, dient dabei als Anschlagskante der Rastelemente 121 der Sprinklervorrichtung V. In der in Fig. 3 dargestellten Ausführungsform des Anschlussstutzens 2 sind ähnlich den Ausnehmungen 212a und der Nutabschnitte 211a ebenso sich von der Ebene der Rohranschlussöffnungen 21 nach Innen des Anschlussstutzens 2 verlaufende Ausnehmungen 212 sowie in Umfangsrichtung des Innenumfangs der Korpusse 23 verlaufende Nutabschnitte 211 ausgebildet. Die Abmessungen der Nutabschnitte 211 und Ausnehmungen 212 kann dabei jenen der Nut 211a und der Ausnehmung 212a zur Aufnahme der Sprinklervorrichtung V entsprechen, kann aber auch von dieser unterschiedlich sein.

Die Anzahl der an den Korpussen 23 ausgebildeten Ausnehmungen 212, bzw. Nutabschnitten 211 kann, wie in Fig. 3 dargestellt, zwei sein, es können aber auch mehrere Nutabschnitt 211 und Ausnehmungen 212 ausgebildet sein. Diese Vertiefungen ermöglichen dabei eine Verbindung zwischen dem Anschlussstutzen 2 und dem Rohrstück R mittels einer Steck-Dreh-Verbindung, ähnlich der Verbindung zwischen Anschlussstutzen 2 und Sprinklervorrichtung V. Bei einer anderen Ausführungsform sind anstelle der Nutabschnitte 211 und Ausnehmungen 212 sich von der Ebene der Rohranschlussöffnung 21 nach Innen des Anschlussstutzens 2 erstreckende Gewindeabschnitte ausgebildet. Mittels dieser Innengewinde kann der Anschlussstutzen 2 so auf ein Rohrstück R geschraubt werden. Alternativ kann diese Verbindung zwischen Anschlussstutzen 2 und Rohrstück R auch mittels Verschweißen, Verpressen oder ähnlichem erfolgen.

Wie in Fig. 3 zudem dargestellt ist, sind an den Korpussen 23, 23a Bohrungen ausgebildet, welche sich radial über die Wandung des jeweiligen Korpus erstrecken. Wie hier dargestellt ist, können die Bohrungen 23, 23a an jedem Korpus ausgebildet sein. Alternativ kann nur der Korpus 23a, in welchen die Sprinklervorrichtung 1 eingefügt wird, über Bohrungen 24a verfügen. Auch die Anzahl der Bohrungen 24, 24a, welche an einem Korpus 23, 23a ausgebildet sind, kann variieren. So können etwa zwei sich radial gegenüberliegende Bohrungen 24a am Korpus 23a ausgebildet sein. Durch diese Bohrungen 24, 24a können beispielsweise Schrauben eingeschraubt werden.

Nach dem Einschrauben stoßen die Schrauben gegen den Außenumfang des jeweils eingefügten Elements, wodurch ein Verdrehen des jeweils eingefügten Elements, genauer der Rohrleitung R oder der Sprinklervorrichtung V, relativ zu dem Anschlussstutzen 2 verhindert wird. Mit anderen Worten können die in den Bohrungen 24, 24a eingefügten Schrauben einer gewissen Kraft entgegenwirken, welche etwa als Drehmoment am eingefügten Element auftritt. Je nach Oberflächenbeschaffenheit der Schraube und der Stelle an welcher die Schraube auf das eingefügte Element trifft, wirkt gegen ein mögliches Drehmoment dabei eine Haft- bzw. bei einer Relativbewegung eine Reibkraft etwa zwischen der Schraube und dem Sprinklerkopf 1 oder dem Rohrstück R.

Die Haft- bzw. Reibkraft wird dabei über die Schraube auf den Anschlussstutzen 2 übertragen. Durch diese Maßnahme können ein Verdrehen und damit ein Lösen des eingefügten Elements verhindert und somit die Sicherheit der Sprinkleranlage erhöht werden. Die Schrauben können beispielsweise als Madenschrauben ausgebildet sein. Alternativ kann auch ein Stift oder Bolzen in die Bohrung eingefügt werden. Zudem kann die Schraube etwa auch über einen Schraubenkopf verfügen, der beispielsweise als Senkkopf in einer entsprechend ausgebildeten konischen Form der Bohrungen 24, 24a versenkt werden kann.

Fig. 4 zeigt eine weitere Ausführungsform eines Anschlussstutzens 2. Wie hier dargestellt ist, sind an dem Anschlussstutzen 2 zwei, in ihren Öffnungsebenen senkrecht zueinander stehende Rohranschlussöffnungen 21, 21a ausgebildet, so dass diese Ausführungsform ein Winkel- bzw. Endstück des Anschlussstutzens 2 darstellt. Dabei ist eine Rohranschlussöffnung 21a zur Aufnahme der Sprinklervorrichtung V ausgebildet, während die zweite Rohranschlussöffnung 21 zur Aufnahme des Rohrstücks R ausgebildet ist. Auch bei dieser Ausführungsform ist nur die Verbindung zwischen Sprinklervorrichtung V und Anschlussstutzen 2 mittels entsprechender Ausnehmungen 211a und Nutabschnitte 211a als Dreh-Steck-Verbindung festgelegt.

Die Verbindungsart zwischen Rohrstück R und Anschlussstutzten 2 dagegen ist nicht bestimmt, und kann ebenso über eine hier dargestellte Dreh-Steck-Verbindung über die Ausnehmungen 212 und Nutabschnitte 211 erfolgen. Alternativ kann auch bei dieser Ausführungsform am Innenumfang des Korpus 23 ein Innengewinde ausgebildet sein, in welches ein Rohrstück R eingeschraubt werden kann. Als weitere Ausführungsformen des Anschlussstutzens 2 können ebenso Kreuz- oder Sternstücke ausgebildet werden, welche neben jeweils einer Rohranschlussöffnung 21a eine Mehrzahl, etwa drei oder vier, der Rohranschlussöffnungen 21 aufweisen.

Wie in Fig. 3 oder Fig. 4 dargestellt ist, können an den Umfangskanten des Anschlussstutzen 2 Fasen vorgesehen sein, um etwa die Handhabung des Anschlussstutzen 2 zu erleichtern. Ebenso kann der Abschnitt des Korpus 23, 23a einen im Vergleich zu einem Mittelbereich 25 des Anschlussstutzen 2, das heißt dem Bereich, welcher sich an den Korpus 23, 23a anschließt und sich in Richtung jeweils von den Rohranschlussöffnungen 21,21a weg erstreckt, einen kleineren Außenumfang aufweisen. Mit anderen Worten kann die Wandstärke des Anschlussstutzens 2 im Bereich des Mittelbereichs 25 geringer als die Wandstärke der Korpusse 23, 23a sein. Auch kann sich die Wandstärke des Mittelbereichs 25 von jenen der Korpusse 23, 23a unterscheiden, wobei auch der Innenumfang zwischen dem Korpus 23 und 23a variieren kann. Alternativ kann der Außenumfang zwischen dem Mittelbereich und dem Korpus 23, 23a identisch sein, das heißt keine Kante ausbilden.

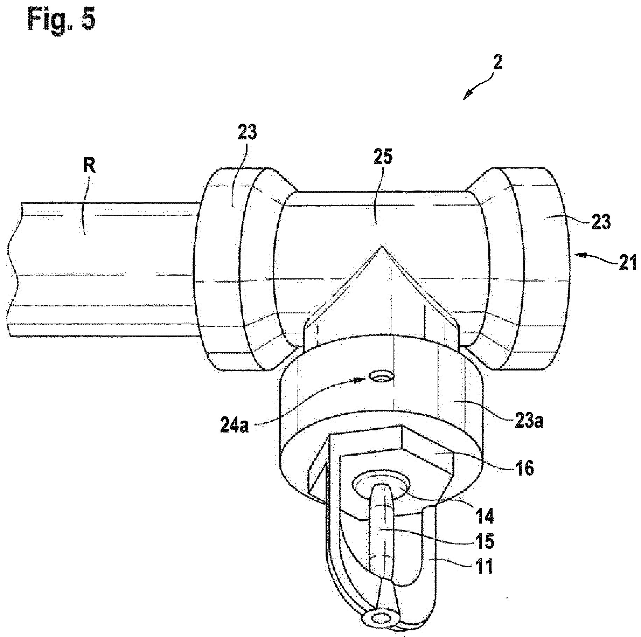

Weiter kann der Außenumfang des Korpus 23 identisch zu dem Außenumfang des Korpus 23a sein, aber ebenso von diesem, entsprechend dem Innenumfang, abweichen. Auch kann bei einer Mehrzahl von Rohranschlussöffnungen 21 jeder Korpus 23 einen unterschiedlichen Außenumfang, sowie Innenumfang aufweisen. Fig. 5 zeigt einen zusammengebauten Zustand aus dem Anschlussstutzen 2 sowie der Sprinklervorrichtung V und somit eine Ausfiihrungsform des Sprinklersystems S. An diesem Sprinklersystem S ist hier zudem ein Rohrstück R in den Anschlussstutzen 2 eingefügt.

Genauer wird über die Rohranschlussöffnung 21 das Rohrstück R in den Korpus 23 eingefügt. Über die Rohranschlussöffnung 21a erfolgt das Einfügen der Sprinklervorrichtung V derart, dass sich zumindest ein Teilbereich des Rohrelements 12 in dem Korpus 23a befindet. Wie in Fig. 5 zu sehen ist, ragt der sechskantige Teilbereich 16 des Rohrelements 12 aus dem Anschlussstutzen 2 heraus, so dass die Sprinklervorrichtung V über diesen Teilbereich 16 leicht mit einem Werkzeug erreicht werden kann. Verkantet bei der Montage etwa die Sprinklervorrichtung V in dem Rohrstück R, so kann der Monteur hilfsweise zu einem Werkzeug greifen, und an dieser Stellte, dem Teilbereich 16 ansetzten, ohne dabei die Sprinklervorrichtung V zu beschädigen. Der Teilbereich des Rohrelements 12, an welchem sich das zumindest eine Dichtungselement 123 sowie die zumindest zwei Rastelemente 121 befinden, ist in dem in Fig. 3 gezeigten Zustand in dem Anschlussstutzen 2 aufgenommen.

Dabei steht das zumindest eine Dichtungselement 123 in Umfangskontakt mit dem Innenumfang des Korpus 23a, während die Rastelemente 121 in den Nutabschnitten 211a aufgenommen sind. Zum Erreichen dieses Zustands wird die Sprinklervorrichtung V mit ihrem Rohrelement 12 in Axialrichtung bzw. entlang der Mittelachse des Korpus 23a in den Anschlussstutzen 2 eingesteckt. Die in Einsteckrichtung vordere Kante der Rastelemente 121 stößt anschließend gegen eine Begrenzungsfläche der Nutabschnitte 211a. Ab diesem Zeitpunkt findet in dieser Ausführungsform keine Axialbewegung sondern nur noch eine Rotationsbewegung der Sprinklervorrichtung V statt, durch welche die Rastelemente 121 in den Nutabschnitten 211a in Umfangsrichtung geführt werden.

Auch diese Rotationsbewegung wird durch eine Begrenzungsfläche der Nutabschnitte 211a gestoppt. Dabei kann die Begrenzungsfläche der Nutabschnitte 211a in Radialrichtung verlaufen, das heißt senkrecht zu einer Tangente am Innenumfang des Korpus 23a stehen. Ebenso ist eine Begrenzungsfläche möglich, welche mit der Tangente des Innenumfangs einen spitzen Winkel einschließt, so dass die Begrenzungsfläche ausläuft. Mit anderen Worten ist eine Begrenzungsfläche denkbar, welche einen geringeren Radius als der Innenumfang des Rohrelements 12 selbst aufweist. Durch diese anfängliche axiale Steckbewegung und anschließende radiale Drehbewegung kann die Sprinklervorrichtung V schnell in den Anschlussstutzen 2 eingefügt werden.

Ähnlich kann eine derartige Steck-Dreh-Verbindung durch Nutabschnitte 211 und Ausnehmungen 212 des Anschlussstutzens 2 mit dem Rohrstück R erfolgen. Alternativ kann die Verbindung zwischen Rohrstück R und Anschlussstutzen 2 auch nicht lösbar ausgebildet sein. So kann die Verbindung etwa mittels Schweißen oder Pressen ausgebildet werden. Wie in Fig. 5 zu sehen ist, verläuft die Bohrung 24a durch den Korpus 23a in einem Bereich des Korpus 23a, in welchem das Rohrelement 12 der Sprinklervorrichtung V aufgenommen ist.

Mit anderen Worten stößt die in die Bohrung 24a eingebrachte Schraube gegen den Außenumfang des Rohrelements 12 der Sprinklervorrichtung V an. Neben der Sicherung gegen Verdrehen kann die Schraube auch zur Positionsbestimmung verwendet werden. Beispielsweise kann am Außenumfang des Rohrelements 12 an einer bestimmten, im zusammengebauten Zustand der Bohrung 24a gegenüberliegenden Stelle eine Versenkung ausgebildet sein. Wird die Schraube bei dem Sprinklersystems S über die Bohrung 24a durch den Korpus 23a in die Bohrung 24a des Rohrelements 12 eingeschraubt, so kann hierdurch überprüft werden, dass die Sprinklervorrichtung V ordnungsgemäß eingefügt ist.

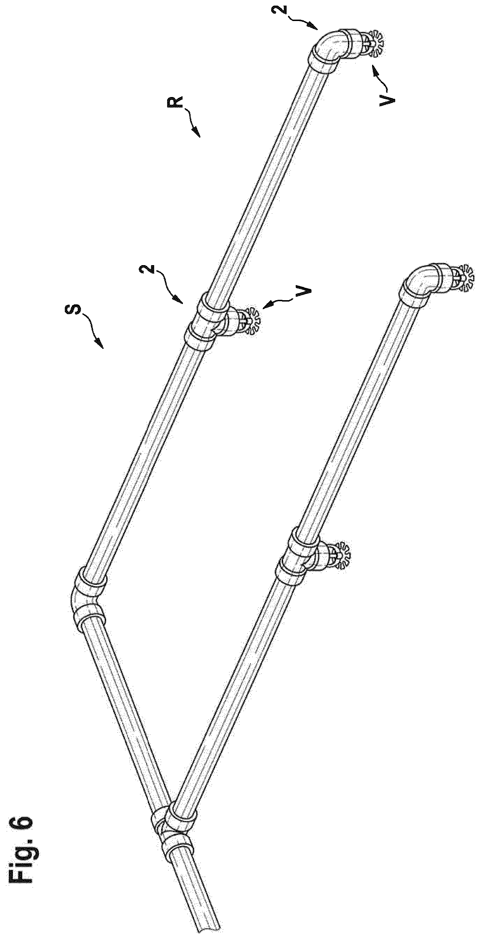

Hierfür können an der Schraube von außen erkennbare Markierungen angebracht sein, an welchen ablesbar ist, wie weit die Schraube eingeschraubt ist. So kann mittels Blickkontrolle schnell erfasst werden, ob die Steck-Dreh-Verbindung ordnungsgemäß erfolgt ist. In Fig. 6 ist ein Rohrleitungssystem dargestellt. Wie hier zu sehen ist, sind zwischen den Rohrstücken R, Anschlussstutzen 2 als T-Stücke eingefügt sowie an den jeweiligen Endabschnitten des Rohrleitungssystems Anschlussstutzen 2 als Winkel-Stück mit je nur einem Rohrstück R verbunden. In die Anschlussstutzen 2 ist hier jeweils eine Sprinklervorrichtung V eingefügt.

Abhängig von dem Einsatzbereich der Sprinkleranlage, etwa einer bestimmten Brandgefahrenklasse, müssen unterschiedliche Druck-Durchflussraten-Bedingungen erfüllt sein. Je nach Einsatzgebiet kann daher sowohl der Innendurchmesser der jeweiligen Rohrstücke R, Anschlussstutzen 2 sowie des Rohrelements 12 des Sprinklerkopfs 1 variiert werden. Auch kann über Materialeigenschaften sowie Wandstärken der genannten Bestandselemente die Belastungsgrenze variiert werden. Beispielsweise können die Rastelemente 121 bei Drücken bis 16 bar in ihren Abmessungen geringer dimensioniert werden, als Rastelemente 121, welche in Sprinklervorrichtungen V vorgesehen sind, die für Drücke über 16 bar ausgelegt sind.

Bei einem Einsatz der Sprinkleranlage, das heißt in einem Brandfall, zerspringt die Glasampulle 15 entsprechend einer bestimmten Temperatur. Das Verschlusselement 14 wird aus der Wasserauslassöffnung 19 gedrückt und Wasser kann über das Rohrstück R, den Anschlussstutzen 2 und das Rohrelement 12 ausgelassen werden. Dieser plötzliche Druckabfall in dem Rohrleitungssystem kann als Signal erfasst werden worauf anschließend eine Pumpe betrieben wird, welche dem Rohrleitungssystem ausreichend Wasser zuführt.

## Patentansprüche

1. Sprinklervorrichtung (V) mit einem Sprinklerkopf (1), der ein Rohrelement (12) und ein mit dem Rohrelement (12) verbundenes Rahmenelement (11) aufweist, wobei:
das Rohrelement (12) eine Wassereinlassöffnung (18) sowie eine der Wassereinlassöffnung (18) in Axialrichtung des Rohrelements (12) gegenüberliegende, dem Rahmenelement (11) zugewandte Wasserauslassöffnung (19) aufweist;
ein Verschlusselement (14) in der Wasserauslassöffnung (19) aufgenommen ist und diese verschließt; und
eine mit Flüssigkeit befüllte Glasampulle (15) derart in Längsrichtung des Sprinklerkopfs (1) zwischen dem Verschlusselement (14) und dem Rahmenelement (11) angeordnet ist, dass deren erstes Ende (151) an dem Verschlusselement (14) anliegt, und deren zweites Ende (152) an dem Rahmenelement (11) anliegt,
wodurch die Glasampulle (15) das Verschlusselement (14) in der Wasserauslassöffnung (19) des Rohrelements (12) hält,
**dadurch gekennzeichnet, dass**
das Rohrelement (12) an seinem Außenumfang zumindest zwei Rastelemente (121) aufweist, welche sich radial von der Außenumfangsfläche des Rohrelements (12) nach außen erstrecken;
das Rohrelement (12) an seiner Außenfläche ferner zumindest eine in Umfangsrichtung verlaufende Nut (122) aufweist, in welcher ein Dichtungselement (123) aufgenommen ist, wobei die zumindest eine Nut (122) in Axialrichtung des Rohrelements (12) in Richtung zur Wassereinlassöffnung (18) betrachtet weiter von der Wasseraustrittsöffnung (19) beabstandet ist als die zumindest zwei Rastelemente (121);
die Oberfläche einzelner Abschnitte des Rohrelements (12) derart bearbeitet ist, dass zumindest der Bereich des Rohrelements (12) von der Wassereinlassöffnung (18) bis einschließlich der zumindest einen Nut (122) eine geringere Oberflächenrauigkeit aufweist als der übrige Bereich des Rohrelements (12), und dass Seitenflächen der Rastelemente (121) derart bearbeitet sind, dass ein beim Eindrehen des Sprinklerkopfes (1) in einen Anschlussstutzen (2) entstehender Reibungswiderstand gering ist; und
das Verschlusselement (14) zumindest in einem Teilbereich konisch, sich in Richtung zur Wasserauslassöffnung (19) verbreiternd, ausgebildet ist, und in Führungen am Innenumfang des Rohrelements (12) in Axialrichtung des Rohrelements (12) derart verschiebbar gehalten ist, dass das Verschlusselement (14), wenn es durch die Glasampulle (15) gehalten wird, die Wasserauslassöffnung (19) verschließt, und dass sich das Verschlusselement (14), wenn es nicht durch die Glasampulle (14) gehalten wird, derart in den Führungen verschiebt, dass ein Spalt zwischen dem Verschlusselement (14) und dem Innenumfang des Rohrelement (12) ausgebildet wird.

2. Sprinklervorrichtung (V) nach Anspruch 1, wobei
die zumindest zwei Rastelemente (121) auf einer gemeinsamen Ebene senkrecht zur Axialrichtung des Rohrelements (12) angeordnet sind.

3. Sprinklervorrichtung (V) nach Anspruch 1 oder 2, wobei
das Rohrelement (12) und das Rahmenelement (11) des Sprinklerkopfes (1) einstückig ausgebildet sind.

4. Sprinklervorrichtung (V) nach einem der Ansprüche 1 bis 3, wobei
ein Teilbereich (16) des Außenumfangs des Rohrelements (12) im Bereich der Wasserauslassöffnung (19) polygonal, vorzugsweise als Sechskant, ausgebildet ist und zumindest teilweise über den Außenumfang des Rohrelements (12) radial nach außen ragt.

5. Sprinklervorrichtung (V) nach einem der Ansprüche 1 bis 4, wobei
sich die zumindest zwei Rastelemente (121) derart radial von der Außenumfangsfläche des Rohrelements (12) nach außen erstrecken, dass zwischen den in Richtung zur Wasserauslassöffnung (19) zeigenden Außenflächen (121a) der zumindest zwei Rastelemente (121) und der Außenumfangsfläche des Rohrelements (12) ein Winkel zwischen 30° und 90°, vorzugsweise zwischen 45° und 60°, gebildet wird.

6. Sprinklervorrichtung (V) nach einem der Ansprüche 1 bis 5, wobei
der Sprinklerkopf (1) ferner einen Sprühteller (13) aufweist, der am Rahmenelement (11) befestigt ist, und die mit Flüssigkeit befüllte Glasampulle (15) an dem mit dem Sprühteller (13) verbundenen Abschnitt des Rahmenelements (11) anliegt.

7. Sprinklersystem (S) aufweisend:
eine Sprinklervorrichtung (V) nach einem der Ansprüche 1 bis 6; sowie einen Anschlussstutzen (2); wobei:
der Anschlussstutzen (2) zumindest zwei in ihren Öffnungsebenen senkrecht zueinander stehende Rohranschlussöffnungen (21, 21a) mit jeweils einem sich daran einstückig anschließenden, zylindrisch verlaufenden Korpus (23, 23a) aufweist,
an einer Innenumfangsfläche des Korpus (23a) einer ersten Rohranschlussöffnung (21a) der zumindest zwei Rohranschlussöffnungen (21, 21a) von der ersten Rohranschlussöffnung (21a) beabstandete, zumindest teilweise umlaufende, erste Nutabschnitte (211a) ausgebildet sind, die mit in Umfangsrichtung voneinander beabstandeten, vorzugsweise einander radial gegenüberliegenden, ersten Ausnehmungen (212a) verbunden sind, die sich von den ersten Nutabschnitten (211a) axial bis zu der Öffnungsebene der ersten Rohranschlussöffnung (21a) erstrecken,
an einer Innenumfangsfläche des Korpus (23) zumindest einer zweiten Rohranschlussöffnung (21) der zumindest zwei Rohranschlussöffnungen (21, 21a) Haltemittel ausgebildet sind,
die Rastelemente (121) der Sprinklervorrichtung (V) derart über die ersten Ausnehmungen (212a) der ersten Rohranschlussöffnung (21a) in die ersten Nutabschnitte (211a) des Anschlussstutzens (2) einbringbar sind, dass zumindest ein Teilbereich des Rohrelements (12) des Sprinklerkopfs (1) in den Anschlussstutzen (2) einfügbar sowie anschließend zur Befestigung des Sprinklerkopfs (1) am Anschlussstutzen (2) relativ zu diesem verdrehbar ist, und
ein Rohrstück (R) vermittels des an dem Anschlussstutzen (2) ausgebildeten Haltemittels an dem Anschlussstutzen (2) anbringbar ist.

8. Sprinklersystem (S) nach Anspruch 7, wobei
in einem Teilbereich einer Wandung des Korpus (23, 23a) zumindest einer der zumindest zwei Rohranschlussöffnungen (21, 21a) eine Bohrung (24) ausgebildet ist, die, vorzugsweise durch zumindest einen der Nutabschnitte (211, 211a), radial durch den Teilbereich der Wandung des Korpus (23, 23a) zumindest teilweise nach außen verläuft, zur Aufnahme eines separat ausgebildeten oder an der Sprinklervorrichtung (V) oder dem Rohrstück (R) ausgebildeten Sicherungselements.

9. Sprinklersystem (S) nach Anspruch 7, wobei
als Haltemittel der zumindest einen zweiten Rohranschlussöffnung (21) von der zweiten Rohranschlussöffnung (21) beabstandete, zumindest teilweise umlaufende zweite Nutabschnitte (211) ausgebildet sind, die mit in Umfangsrichtung voneinander beabstandeten, vorzugsweise einander radial gegenüberliegenden, zweiten Ausnehmungen (212) verbunden sind, die sich von den zweiten Nutabschnitten (211) axial bis zur Öffnungsebene der zweiten Rohranschlussöffnung (21) erstrecken.

10. Sprinklersystem (S) nach Anspruch 7, wobei
als Haltemittel der zumindest einen zweiten Rohranschlussöffnung (21) ein als Innengewinde ausgebildeter Befestigungsabschnitt ausgebildet ist.

## Claims

1. A sprinkler device (V) with a sprinkler head (1) which comprises a pipe element (12) and a frame element (11) connected to the pipe element (12), wherein
the pipe element (12) comprises a water inlet opening (18) and a water outlet opening (19) opposite the water inlet opening (18) in the axial direction of the pipe element (12) and facing the frame element (19);
a closure element (14) is received in the water outlet opening (19) and closes same; and
between the closure element (14) and the frame element (11), a liquid-filled glass bulb (15) is disposed in the longitudinal direction of the sprinkler head (1) in such a way that its first end (151) lies against the closure element (14) and its second end (152) lies against the frame element (11), whereby the glass bulb (15) holds the closure element (14) in the water outlet opening (19) of the pipe element (12),
**characterised in that**
the pipe element (12) comprises at least two latching elements (121) on its outer periphery, which extend radially outwards from the outer peripheral surface of the pipe element (12);
the pipe element (12) further comprises, on its outer surface, at least one groove (122) extending in the peripheral direction, in which a sealing element (123) is received, wherein, when viewed in the axial direction of the pipe element (12) in the direction towards the water inlet opening (18), the at least one groove (122) is spaced further apart from the water outlet opening (19) than the at least two latching elements (121);
the surface of sections of the pipe element (12) is processed such that at least an area of the pipe element (12) from the water inlet opening (18) up to the at least one groove (122) has a lower surface roughness than the remaining area of the pipe element (12) and the side surfaces of the latching elements (121) are processed in such a way that a frictional resistance arising as the sprinkler head (1) is being turned into a connecting piece (2) is low; and
the closure element (14) is formed conically at least in one partial region, widening in the direction towards the water outlet opening (19), and is displaceably held in guides on the inner periphery of the pipe element (12) in the axial direction of the pipe element (12) in such a way that the closure element (14), when it is held by the glass bulb (15), closes the water outlet opening (19), and that the closure element (14), when it is not held by the glass bulb (15), is displaced in the guides in such a way that a gap is formed between the closure element (14) and the inner periphery of the pipe element (12).

2. Sprinkler device (V) as claimed in claim 1, wherein
the at least two latching elements (121) are disposed on a common plane perpendicular to the axial direction of the pipe element (12).

3. Sprinkler device (V) as claimed in claim 1 or 2, wherein
the pipe element (12) and the frame element (11) of the sprinkler head (1) are formed as one piece.

4. Sprinkler device (V) as claimed in any one of claims 1 to 3, wherein
a partial region (16) of the outer periphery of the pipe element (12) is polygonal, preferably hexagonal, in the region of the water outlet opening (19) and protrudes radially outwards at least partially over the outer periphery of the pipe element (12).

5. Sprinkler device (V) as claimed in any one of claims 1 to 4, wherein
the at least two latching elements (121) extend radially outwards from the outer peripheral surface of the pipe element (12) in such a way that an angle between 30° and 90°, preferably between 45° and 60°, is formed between the outer surfaces (121a), which face in the direction towards the water outlet opening (19), of the at least two latching elements (121) and the outer peripheral surface of the pipe element (12).

6. Sprinkler device (V) as claimed in any one of claims 1 to 5, wherein
the sprinkler head (1) further comprises a deflector (13) which is fastened to the frame element (11), and the liquid-filled glass bulb (15) lies on the section of the frame element (11) connected to the deflector (13).

7. Sprinkler system (2) comprising:
a sprinkler device (V) as claimed in any one of claims 1 to 6; and
a connecting piece (2), wherein
the connecting piece (2) comprises at least two pipe connection openings (21, 21a) which are perpendicular to each other in their opening planes, wherein each pipe connection opening (21, 21a) comprises a cylindrically extending body (23, 23a) attached as one piece thereto,
at least partially circumferential first groove sections (211a) which are spaced apart from the first pipe connection opening (21a) are formed on an inner peripheral surface of the body (23a) of a first pipe connection opening (21a) of the at least two pipe connection openings (21, 21a), which first groove sections are connected to first recesses (212a) which are preferably radially opposite each other, are spaced apart from each other in the peripheral direction and extend from the first groove sections (211a) axially as far as the opening plane of the first pipe connection opening (21a), and
holding means are formed on an inner peripheral surface of the body (23) at least of a second pipe connection opening (21) of the at least two pipe connection openings (21, 21a),
the latching elements (121) of the sprinkler device (V) can be introduced into the first groove sections (211a) of the connecting piece (2) via the first recesses (212a) of the first pipe connection opening (21a) in such a way that at least one partial region of the pipe element (12) of the sprinkler head (1) can be inserted into the connecting piece (2) and then, in order to fasten the sprinkler head (1) to the connecting piece (2), can be rotated relative thereto, and
by means of the holding means formed on the connecting piece (2), a pipe piece (R) can be attached to the connecting piece (2).

8. Sprinkler system (S) as claimed in claim 7, wherein
a bore (24) is formed in a partial region of a wall of the body (23, 23a) at least of one of the at least two pipe connection openings (21, 21a), this bore preferably extends through at least one of the groove sections (211, 211a), radially through the partial region of the wall of the body (23, 23a) and at least partially outwards in order to receive a securing element formed separately or formed on the sprinkler device (V) or the pipe piece (R).

9. Sprinkler system (S) as claimed in claim 7, wherein
at least partially circumferential second groove sections (211) which are spaced apart from the second pipe connection opening (21) are formed as holding means of the at least one second pipe connection opening (21), these second groove sections are connected to second recesses (212) which are preferably radially opposite each other, are spaced apart from each other in the peripheral direction and extend from the second groove sections (211) axially as far as the opening plane of the second pipe connection opening (21).

10. Sprinkler system (S) as claimed in claim 7, wherein
a fastening section designed as an inner thread is formed as a holding means of the at least one second pipe connection opening (21).

## Revendications

1. Extincteur automatique (gicleur) (V) comportant une tête de gicleur (1) avec un élément de tube (12) et un élément de cadre (11) relié à l'élément de tube (12),
dans lequel
- l'élément de tube (12) a une entrée d'eau (18) dans la direction axiale de l'élément de tube (12) à l'opposé de l'entrée d'eau (18), une sortie d'eau (19) tournée vers l'élément de cadre (11),
- un élément d'obturation (14) logé dans l'orifice de sortie d'eau (19) et fermant celui-ci, et
- une ampoule en verre (15) remplie de liquide, installée dans la direction longitudinale de la tête de gicleur (1) entre l'élément d'obturation (14) et l'élément de cadre (11) de façon que sa première extrémité (151) s'applique contre l'élément d'obturation (14) et sa seconde extrémité (152) s'applique contre l'élément de cadre (11), l'ampoule en verre (15) maintenant ainsi l'élément d'obturation (14) dans l'orifice de sortie d'eau (19) de l'élément de tube (12),
extincteur **caractérisé en ce que**
- l'élément de tube (12) comporte à sa périphérie extérieure, au moins deux éléments d'accrochage (121) qui s'étendent radialement vers l'extérieur à partir de la surface périphérique extérieure de l'élément de tube (12),
- l'élément de tube (12) comporte en outre sur sa surface extérieure, au moins une rainure (122), périphérique, recevant un joint (123),
* au moins la rainure (122) considérée dans la direction axiale de l'élément de tube (12) dans la direction de l'orifice d'entrée (18) est plus écartée de l'orifice de sortie d'eau (19) que les seconds éléments d'accrochage (121),
- la surface extérieure de différents segments de l'élément de tube (12) est usinée pour qu'au moins la zone de l'élément de tube (12) allant de l'orifice d'entrée d'eau (18) jusque, y compris, au moins une rainure (122), présente une rugosité de surface plus faible que celle de la zone restante de l'élément de tube (12) et les surfaces latérales des éléments d'accrochage (121) sont usinées pour que lorsqu'on visse la tête de gicleur (1) dans un ajutage de branchement (2), la résistance par frottement générée soit faible, et
- l'élément d'obturation (14) est réalisé au moins dans une zone partielle, de forme conique qui va en s'ouvrant en direction de l'orifice de sortie d'eau (19) et cet élément est tenu coulissant dans des guides de la périphérie intérieure de l'élément de tube (12), dans la direction axiale de cet élément de tube (12) pour que l'élément d'obturation (14) lorsqu'il est tenu par l'ampoule en verre (15), ferme l'orifice de sortie d'eau (19) et que l'élément d'obturation (14) lorsqu'il n'est plus tenu par l'ampoule en verre (14) se déplace dans les guides pour former un intervalle entre l'élément d'obturation (14) et la périphérie intérieure de l'élément de tube (12).

2. Extincteur automatique (V) selon la revendication 1,
dans lequel
au moins les deux éléments d'accrochage (121) sont dans un plan commun, perpendiculaire à la direction axiale de l'élément de tube (12).

3. Extincteur automatique (V) selon la revendication 1 ou 2,
dans lequel
l'élément de tube (12) et l'élément de cadre (11) de la tête de gicleur (1) sont en une seule pièce.

4. Extincteur automatique (V) selon l'une des revendications 1 à 3, dans lequel
une zone partielle (16) de la périphérie extérieur de l'élément de tube (12) est de forme polygonale dans la zone de l'orifice de sortie d'eau (19), de préférence sous la forme d'un hexagone, et elle vient radialement en saillie, au moins partiellement de la périphérie extérieure de l'élément de tube (12).

5. Extincteur automatique (V) selon l'une des revendications 1 à 4, dans lequel
au moins les deux éléments d'accrochage (121) sont en saillie radialement à partir de la surface périphérique extérieure de l'élément de tube (12) pour qu'entre les surfaces extérieures (121a) orientées en direction de l'orifice de sortie d'eau (19) d'au moins les deux éléments d'accrochage (121) et de la surface périphérique extérieure de l'élément de tube (12), on a un angle compris entre 30° et 90°, de préférence entre 45° et 60°.

6. Extincteur automatique (V) selon l'une des revendications 1 à 5, dans lequel
la tête de gicleur (1) comporte en outre une coupelle de gicleur (13) fixée à l'élément de cadre (11) et l'ampoule en verre (15) remplie de liquide s'applique contre le segment de l'élément de cadre (11) relié à la coupelle de pulvérisation (13).

7. Système d'extincteur automatique à gicleur (S) comprenant :
- un extincteur automatique (V) selon l'une des revendications 1 à 6 ainsi que,
- un ajutage de raccordement (2),
dans lequel
- l'ajutage de raccordement (2) comporte au moins deux orifices de raccordement de tube (21, 21a) perpendiculaires l'un à l'autre dans deux plans d'orifice, et ayant respectivement un corps (23, 23a), cylindrique raccordé en une seule pièce,
- sur une surface périphérique intérieure du corps (23a) d'un premier orifice de raccordement de tube (21a) des deux orifices de raccordement de tube (21, 21a), on a au moins deux segments de rainure (211a), partiellement périphériques, écartés du premier orifice de raccordement de tube (21a), ces segments de rainure étant reliés à des premiers évidements (212a), écartés les uns des autres dans la direction périphérique, de préférence qui se font radialement face, et qui s'étendent à partir des premiers segments de rainure (211a), axialement jusque dans le plan d'ouverture du premier orifice de raccordement de tube (21a),
- des moyens de fixation sont réalisés sur la surface périphérique intérieure du corps (23), au moins du second orifice de raccordement de tube (21) parmi les deux orifices de raccordement de tube (21, 21a),
- les éléments d'accrochage (121) de l'extincteur automatique (V) peuvent se loger par les premiers évidements (212a) du premier orifice de raccordement de tube (21a) dans les premiers segments de rainure (211a) de l'ajutage (2) pour qu'au moins une zone partielle de l'élément de tube (12) de la tête de gicleur (1) puisse s'engager dans l'ajutage de raccordement (2) et ensuite être tourné par rapport à celui-ci pour fixer la tête de gicleur (1) à l'ajutage de raccordement (2), et
- un élément de tube (R) est mis en place dans l'ajutage de raccordement (2) par le moyen de fixation réalisé sur l'ajutage de raccordement (2).

8. Système d'extincteur automatique à gicleur (S) selon la revendication 7,
dans lequel
dans une zone partielle d'une paroi du corps (23, 23a), au moins l'un des deux orifices de raccordement de tube (21, 21a) comporte un perçage (24) qui relie au moins en partie à l'extérieur, au moins l'un des segments de rainure (211, 211a), radialement à travers la zone partielle de la paroi du corps (23, 23a), pour recevoir un élément de sécurité réalisé séparément ou sur l'extincteur automatique (V) ou le bout de tube (R).

9. Système d'extincteur automatique à gicleur (S) selon la revendication 7,
dans lequel
les moyens de fixation d'au moins un second orifice de raccordement de tube (21) sont réalisés sous la forme de deux segments de rainure (211), écartés du second orifice de raccordement de tube (21) et qui sont au moins partiellement périphériques, ces segments étant reliés à des seconds évidements (212) écartés l'un de l'autre dans la direction périphérique et qui se font face de préférence radialement, ces évidements s'étendant à partir des seconds segments de rainure (211) axialement jusqu'au plan d'ouverture du second orifice de raccordement de tube (21).

10. Système d'extincteur automatique à gicleur (S) selon la revendication 7,
dans lequel
le moyen de fixation du second orifice de raccordement (21) est un segment de fixation réalisé sous la forme d'un filetage intérieur.
